# EUROPÄISCHE PATENTSCHRIFT

(11) **EP 3 548 227 B1**
(45) Veröffentlichungstag und Bekanntmachung des Hinweises auf die Patenterteilung: **07.10.2020**
(21) Anmeldenummer: 17808338.2
(22) Anmeldetag: 08.11.2017
(51) Int. Cl.: B25B 27/14

(54) **EINBAUWERKZEUG FÜR EINEN DRAHTGEWINDEEINSATZ**
INSTALLATION TOOL FOR A WIRE THREAD INSERT
OUTIL DE MONTAGE D'UN INSERT FILETÉ EN FIL MÉTALLIQUE

(30) Priorität: 22.12.2016 DE 102016125481
(43) Veröffentlichungstag der Anmeldung: 09.10.2019
(73) Patentinhaber: Böllhoff Verbindungstechnik GmbH, 33649 Bielefeld (DE)
(72) Erfinder: MARXKORS, Andreas, 33161 Hövelhof (DE); THOMMES, Holger, 54558 Strohn (DE); ZIMMERMANN, Hermann, 32052 Herford (DE)
(74) Vertreter: HWP Intellectual Property
(86) Internationale Anmeldenummer: PCT/EP2017/078602
(87) Internationale Veröffentlichungsnummer: WO 2018/114122

(56) Entgegenhaltungen:
- EP-B1- 0 153 267
- DE-A1-102011 051 846

## Beschreibung

### 1. Gebiet der Erfindung

Die vorliegende Erfindung betrifft ein Werkzeug zum Ein- oder Ausbauen eines Drahtgewindeeinsatzes in einer Bauteilöffnung mit Gewinde. Des Weiteren betrifft vorliegende Erfindung eine Mitnahmeklinge, die in diesem Werkzeug verwendet wird. Zudem richtet sich vorliegende Erfindung auf ein Herstellungsverfahren für das oben genannte Werkzeug zum Ein- oder Ausbauen eines Drahtgewindeeinsatzes, ein Verfahren zum Wechseln der Mitnahmeklinge im Werkzeug sowie auf ein Installationsverfahren, um den Drahtgewindeeinsatz in der Gewindeöffnung mithilfe des Werkzeugs installieren zu können.

### 2. Hintergrund der Erfindung

Im Stand der Technik sind Drahtgewindeeinsätze allgemein bekannt. Diese werden in Bauteilöffnungen mit Gewinde eingesetzt, um diese Gewinde zu verstärken. Dies ist beispielsweise dann erforderlich, wenn das Bauteil aus einem relativ weichen Material, wie beispielsweise Kunststoff besteht. Der verstärkende Drahtgewindeeinsatz in der Gewindeöffnung nimmt dann die bei der Befestigung eines Gewindeelements auftretenden mechanischen Spannungen auf und verteilt diese schonend auf das die Bauteilöffnung umgebende Bauteilmaterial.

Um diese Drahtgewindeeinsätze in den Gewindeöffnungen installieren zu können, sind im Stand der Technik verschiedene Einbauwerkzeuge bekannt. Diese Einbauwerkzeuge bestehen aus einer Einbauspindel, auf deren Ende der Drahtgewindeeinsatz aufgesteckt oder aufgeschraubt wird. Zudem weisen bekannte Einbauwerkzeuge eine Mitnahmeklinge auf, die innerhalb der Einbauspindel angeordnet ist. Grundsätzlich haben trotz unterschiedlicher Konstruktionsweisen der Einbauwerkzeuge diese das Problem, dass die Einbauspindel und die Mitnahmeklinge einem erheblichen Verschleiß ausgesetzt sind. Dies hat den Nachteil, dass die genutzten Einbauwerkzeuge vollständig ausgetauscht werden müssen.

DE 1 016 066 beschreibt ein Einbauwerkzeug mit einer Einbauspindel. Am Installationsende der Einbauspindel ist ein Gewinde vorgesehen, auf welches der einzubauende Drahtgewindeeinsatz aufgeschraubt wird. An der dortigen Stirnseite der Einbauspindel ist ein radial verlaufender Spalt angeordnet, in dem sich der Einbauzapfen des Drahtgewindeeinsatzes verhakt. Dazu ragt der Einbauzapfen des Drahtgewindeeinsatzes radial einwärts. Nachdem der Drahtgewindeeinsatz ausreichend tief in die Gewindeöffnung eingeschraubt worden ist, löst ein sich axial durch die Einbauspindel bewegbar erstreckender Stift den Einbauzapfen des Drahtgewindeeinsatzes aus der radialen Vertiefung an der Stirnseite der Einbauspindel. Nachfolgend kann das Einbauwerkzeug aus dem Drahtgewindeeinsatz und somit aus der Gewindeöffnung herausgeschraubt werden. Diese technische Lösung hat den Nachteil, dass der radial einwärts ragende Einbauzapfen nach Installation des Drahtgewindeeinsatzes die Gewindeöffnung zentral blockiert. Es können somit lediglich Gewindeelemente bis zum Einbauzapfen eingeschraubt werden. Diese konstruktive Anordnung limitiert der Zahl möglicher Gewindeelemente, die hier genutzt werden können.

Eine weitere Gruppe von Einbauwerkzeugen für Drahtgewindeeinsätze nutzt eine Einbauspindel mit einer zentralen axialen Aussparung. Innerhalb dieser axialen Aussparung ist eine Mitnahmeklinge schwenkbar über einen Bolzen oder Stift fest angeordnet. Derartige Konstruktionen sind beispielsweise in EP 0 615 818 B1, US 6,000,114, EP 0 153 266 B1 und EP 0 153 267 B1 beschrieben. Ein Angriffsende der Mitnahmeklinge ragt entweder über die axiale Stirnseite der Einbauspindel hinaus oder schwenkt über ein Fenster in der Einbauspindel radial nach außen. Über diese spezielle Positionierung kann das Angriffsende der Mitnahmeklinge am zu installierenden Drahtgewindeeinsatz angreifen. Sobald in diesen Einbauwerkzeugen beispielsweise das Angriffsende der Mitnahmeklinge verschlissen ist, muss der Haltestift bzw. Bolzen für die Mitnahmeklinge mithilfe von Werkzeug entfernt werden. Danach kann erst die Mitnahmeklinge ausgebaut und durch eine neue Mitnahmeklinge ersetzt und erneut befestigt werden. Dementsprechend ist ein umfangreicher Wartungsaufwand und die Nutzung von Werkzeugen zum Lösen und erneuten Befestigen der Mitnahmeklinge nötig. Sollte die Einbauspindel beschädigt sein, dann ist sogar der Austausch des vollständigen Einbauwerkzeugs notwendig.

Im Vergleich zu den zuvor beschriebenen Einbauwerkzeugen offenbart EP 1 838 499 B1 eine Einbauspindel, in deren axialer Aussparung die Mitnahmeklinge über eine Schneidenlagerung kippbar angeordnet ist. Somit wird die Mitnahmeklinge nicht mehr aufwendig durch einen im Einbauwerkzeug installierten Stift oder Bolzen gehalten, der im Falle der Wartung aufwendig mithilfe von Werkzeug entfernt werden müsste.

DE 10 2010 050 735 A1 beschreibt eine weitere Alternative eines Einbauwerkzeugs für Drahtgewindeeinsätze. In dieser Konstruktion ist die axiale Stirnseite der Einbauspindel derart ausgestaltet, dass stirnseitige Vorsprünge und/oder Schultern den Einbauzapfen des Drahtgewindeeinsatzes angreifen. Über diesen Angriff ist neben der Installation des Drahtgewindeeinsatzes in der Gewindeöffnung ebenfalls ein Bewegen, hier ein radiales Biegen des Einbauzapfens, möglich. Zu diesem Zweck wird die Mitnahmeklinge derart angeordnet und bewegt, dass sie zum radialen Zurückbiegen des Einbauzapfens in die zylindrische Spirale des Drahtgewindeeinsatzes eine Stauchfläche bereitstellt. Daher ist die Mitnahmeklinge bzw. das Ende der Mitnahmeklinge mit Stauchfläche axial aus der Stirnfläche der Einbauspindel ausstellbar. Daran ist erkennbar, dass die Mitnahmeklinge ihre Ein- und/oder Ausbaufunktion gemäß den unterschiedlichen konstruktiven Alternativen der Einbauwerkzeuge des Standes der Technik durch ein radiales Vorstehen oder ein axiales Vorstehen aus der Einbauspindel realisiert.

DE 10 2011 051 846 A1 beschreibt eine weitere Konstruktionsalternative eines Einbauwerkzeuges für Drahtgewindeeinsätze. Das Angriffsende der hier genutzten Mitnahmeklinge ragt radial nach außen durch eine radiale Aussparung in der Einbauspindel. Im Falle eines Verschleißes des Angriffsendes der Mitnahmeklinge ist es manuell möglich, die Mitnahmeklinge im Einbauwerkzeug und im Speziellen in der axialen Aussparung der Einbauspindel auszutauschen. Denn die Mitnahmeklinge ist lediglich über eine Schnapp- oder Rastverbindung in der axialen Aussparung der Einbauspindel befestigt. Dies ermöglicht einen schnellen und werkzeuglosen Austausch der Mitnahmeklinge im Einbauwerkzeug, was den Wartungsaufwand für derartige Einbauwerkzeuge für Drahtgewindeeinsätze deutlich reduziert.

Es ist Aufgabe der vorliegenden Erfindung, den Wartungsaufwand für Einbauwerkzeuge von Drahtgewindeeinsätzen weiter zu reduzieren.

### 3. Zusammenfassung der Erfindung

Die obige Aufgabe wird durch ein Werkzeug zum Ein- oder Ausbauen eines Drahtgewindeeinsatzes gemäß dem unabhängigen Patentanspruch 1, durch eine Mitnahmeklinge für ein derartiges Werkzeug gemäß dem unabhängigen Patentanspruch 12, durch ein Herstellungsverfahren für ein derartiges Werkzeug zum Ein- oder Ausbauen des Drahtgewindeeinsatzes gemäß dem unabhängigen Patentanspruch 15, durch ein Verfahren zum Wechseln der Mitnahmeklinge in diesem Werkzeug zum Ein- oder Ausbauen des Drahtgewindeeinsatzes gemäß dem unabhängigen Patentanspruch 19 und ein Verfahren zum Wechseln des Spindelkörpers gemäß Patentanspruch 20 sowie durch ein Installationsverfahren für einen Drahtgewindeeinsatz in einer Gewindeöffnung eines Bauteils mit einem derartigen Werkzeug gemäß dem unabhängigen Patentanspruch 21 oder 23 gelöst. Weitere Ausgestaltungen und Weiterentwicklungen vorliegender Erfindung gehen aus der folgenden Beschreibung, den begleitenden Zeichnungen und den anhängenden Patentansprüchen hervor.

Das erfindungsgemäße Werkzeug zum Ein- oder Ausbauen eines Drahtgewindeeinsatzes weist die folgenden Merkmale auf: einen Spindelkörper mit einem Antriebsabschnitt, über den der Spindelkörper um eine Längsachse drehbar ist, einem endseitig und abgewandt vom Antriebsabschnitt angeordneten Aufnahmeabschnitt, in dem ein Gewinde zum Aufdrehen oder eine gewindelose Oberfläche zum Aufstecken des Drahtgewindeeinsatzes auf den Aufnahmeabschnitt vorgesehen ist, und einer axialen Aussparung, die sich im Inneren des Spindelkörpers über eine Länge erstreckt, eine Mitnahmeklinge mit einem Angriffsende, die in der axialen Aussparung zumindest im Bereich des Aufnahmeabschnitts zumindest axial versetzbar angeordnet ist, und ein langgestrecktes Stellglied, das innerhalb der axialen Aussparung in Längsrichtung bewegbar angeordnet ist, sodass das Angriffsende der Mitnahmeklinge über das Stellglied zwischen einer ersten Position innerhalb des Spindelkörpers und einer zweiten Position außerhalb des Spindelkörpers versetzbar ist.

Das erfindungsgemäße Einbau- und/oder Ausbauwerkzeug für Drahtgewindeeinsätze nutzt im Inneren der Einbauspindel ein axial versetzbares Stellglied, um die Mitnahmeklinge zu betätigen. Aufgrund der Bewegung des Stellglieds in axialer Richtung der Einbauspindel wird ein Angriffsende der Mitnahmeklinge zumindest axial gezielt aus dem Inneren der Einbauspindel ausgestellt. Basierend auf dieser veränderten Position des Angriffsendes wird ermöglicht, dass das Angriffsende an einem Drahtgewindeeinsatz angreifen kann, um diesen gezielt ein- und/oder auszubauen. Zu diesem Zweck ist innerhalb der Mitnahmeklinge eine axiale Aussparung vorgesehen, sodass sich das Stellglied über vorzugsweise die gesamte Länge der Einbauspindel erstreckt. Diese Konstruktion macht es möglich, dass Stellglied sowohl manuell und gemäß einer weiteren bevorzugten Konstruktion automatisch zu betätigen, um das Angriffsende der Mitnahmeklinge in Eingriff mit dem Drahtgewindeeinsatz zu bringen. Da das Stellglied weiterhin bevorzugt alleine in axialer Richtung innerhalb der Einbauspindel bewegbar angeordnet ist, ist sowohl die Konstruktion des Stellglieds wie auch die Führung und Befestigung des Stellglieds innerhalb der Einbauspindel konstruktiv einfach ausgestaltet. Denn während eine alleinige axiale Steckverbindung zwischen Einbauspindel und Stellglied ausreichend wäre, ist es erfindungsgemäß bevorzugt, den axialen Stellweg des Stellglieds mithilfe einer formschlüssigen Verbindung zu begrenzen. Dies stellt sicher, dass das Angriffsende der Mitnahmeklinge nur bis zu einem definierten Punkt ausgestellt und von diesem auch wieder definiert zurückgezogen werden kann.

Gemäß einer bevorzugten Ausführungsform des oben beschriebenen Werkzeugs erstreckt sich die Aussparung über die gesamte Länge des Spindelkörpers und das Stellglied erstreckt sich innerhalb dieser Aussparung vom Antriebsabschnitt bis in den Aufnahmeabschnitt, wobei die axiale Bewegung des Stellglieds innerhalb der Aussparung formschlüssig begrenzt ist. Gemäß einer weiteren bevorzugten Ausgestaltung umfasst das Stellglied an einem axialen Ende einen Vorwärtsschieber zur Betätigung der Mitnahmeklinge, der mit einer Längsachse des Spindelkörpers einen Winkel < 90° einschließt.

Das bevorzugte Stellglied innerhalb der Einbauspindel weist in einem Bereich angrenzend an den Aufnahmeabschnitt bevorzugt eine Mehrzahl von in Bezug auf die Längsachse des Stellglieds winklig angeordnete Stellflächen bzw. Betätigungsflächen auf. Diese Betätigungsflächen sind an das gezielte Zusammenwirken mit der Mitnahmeklinge angepasst. Denn über die axiale Bewegung des Stellglieds wird das Angriffsende der Mitnahmeklinge gezielt zumindest axial aus der Einbauspindel bewegt und auch wieder in diese zurückgezogen. In gleicher Weise realisiert mindestens eine weitere Betätigungsfläche ein Halten der Mitnahmeklinge im Inneren der Einbauspindel. Auf diese Weise wird gewährleistet, dass das Stellglied die Mitnahmeklinge nicht vollständig aus der axialen Aussparung der Einbauspindel heraus schiebt, sodass die Mitnahmeklinge von der Einbauspindel gelöst werden würde. Um nun mit der axialen Bewegung des Stellglieds auch ein Ausstellen des Angriffsendes der Mitnahmeklinge aus dem Spindelkörper realisieren zu können, ist die mindestens eine Betätigungsfläche in einem Winkel < 90° in Bezug auf die Längsachse des Stellglieds und der Einbauspindel angeordnet. Vorzugsweise wirkt diese Betätigungsfläche mit einer ebenfalls geneigten Ebene der Mitnahmeklinge zusammen. Dieses Zusammenwirken der Betätigungsflächen realisiert eine effektive Kraftübertragung und vorzugsweise auch eine Ausrichtung der Bewegung der Mitnahmeklinge während des Ausstellens des Angriffsendes aus der axialen Aussparung der Einbauspindel.

Weiterhin bevorzugt umfasst der Spindelkörper des Werkzeugs einen radialen Durchbruch, in dem die Mitnahmeklinge lösbar in axialer Richtung des Spindelkörpers gehalten ist. Dieser radiale Durchbruch ist ähnlich einem Fenster in der radialen Außenseite des Spindelkörpers ausgestaltet. Entsprechend besitzt die Mitnahmeklinge vorzugsweise einen Vorsprung mit einem axialen Hinterschnitt, sodass das Stellglied die Mitnahmeklinge nicht vollständig aus der axialen Aussparung der Einbauspindel herausschieben kann. Während sich dieser Vorsprung bzw. der axiale Hinterschnitt in dem genannten radialen Fenster abstützt, sorgt vorzugsweise die winklig angeordnete Betätigungsfläche des Stellglieds für ein axiales Ausstellen des Angriffsendes der Mitnahmeklinge und ein bevorzugtes kombiniertes radiales Ausstellen des Angriffsendes der Mitnahmeklinge.

Gemäß einer weiteren bevorzugten Ausführungsform des erfindungsgemäßen Werkzeugs weist die Aussparung der Einbauspindel zumindest im Aufnahmeabschnitt eine erste und eine zweite Radialnut auf, die in axialer Richtung verlaufen und von denen zumindest die erste Radialnut die Mitnahmeklinge stützt und die zweite Radialnut das Stellglied stützt. Vorzugsweise ist die radiale Aussparung der Einbauspindel in ihrem radialen Randbereich strukturiert ausgebildet. Eine derartige Struktur wird beispielsweise durch die genannte erste und zweite Radialnut gebildet. Diese Radialnuten eröffnen die Möglichkeit, dass sich zumindest Teile des Stellglieds und auch der Mitnahmeklinge innerhalb dieser Nut abstützen. Durch diese Stützfunktion ist gewährleistet, dass sowohl das Stellglied wie auch die Mitnahmeklinge nicht um ihre Längsachsen innerhalb der Aussparung der Einbauspindel verdreht werden können. Dies liefert dem Werkzeug eine zusätzliche Stabilität, wenn sich ein Drehmoment während des Einbauens oder Ausbauens eines Drahtgewindeeinsatzes auf die Mitnahmeklinge und/oder das Stellglied überträgt.

Weiterhin bevorzugt weist das Stellglied einen Rückwärtsschieber für die Mitnahmeklinge auf, mit dem die Mitnahmeklinge über das Stellglied in die Aussparung versetzbar ist, wobei der Rückwärtsschieber als eine Anlagefläche ausgebildet ist, die mit der Längsachse einen stumpfen Winkel einschließt. In ähnlicher Weise wie die oben beschriebene Betätigungsfläche zum Ausstellen des Angriffsendes der Mitnahmeklinge ist eine weitere Betätigungsfläche in Form eines Rückwärtsschiebers vorgesehen. Dieser Rückwärtsschieber arbeitet mit einer Angriffsfläche der Mitnahmeklinge derart zusammen, dass die Mitnahmeklinge in die axiale innere Aussparung der Einbauspindel zurück gestellt bzw. zurück geschoben wird. Während also bevorzugt die Mitnahmeklinge ihre Orientierung innerhalb der axialen Aussparung der Einbauspindel aufgrund der bevorzugten Radialnut beibehält, bringt das Stellglied die axial verschiebenden Kräfte über daran angepasste Betätigungsflächen auf. Der bevorzugte Rückwärtsschieber wirkt dabei ähnlich einem Haken, wobei er mit einem axialen Hinterschnitt entgegen der Installationsrichtung für Drahtgewindeeinsätze an der Mitnahmeklinge zusammenwirkt. Sobald sich das Stellglied in axialer Richtung zum Antriebsabschnitt bewegt, greift der Rückwärtsschieber an der Mitnahmeklinge an und bewegt diese in die axiale Aussparung der Einbauspindel weiter hinein.

Gemäß einer weiteren bevorzugten Ausführungsform des erfindungsgemäßen Werkzeugs weist die Mitnahmeklinge an einem dem Angriffsende abgewandten Ende ein erstes und ein zweites V-förmig angeordnetes Federbein auf, von denen das erste Federbein ein Ausstellen des Angriffsendes und das zweite Federbein ein Bewegen der Mitnahmeklinge in der Aussparung gewährleistet.

Erfindungsgemäß bevorzugt ist gegenüber zum Angriffsende der Mitnahmeklinge das V-förmige Paar von Federbeinen angeordnet. Ein Schenkel der Federbeine dient dem Eingriff in den oben diskutierten radialen Durchbruch des Spindelkörpers. Innerhalb dieses radialen Durchbruchs bildet das eine Federbein bevorzugt eine Verrastung oder einen axialen Hinterschnitt, sodass die Mitnahmeklinge nicht aus der axialen Aussparung der Einbauspindel herausgeschoben werden kann. Das andere Federbein greift bevorzugt am Rückwärtsschieber des Stellglieds an, sobald das Stellglied in Richtung des Antriebsabschnitts bewegt wird. Daraus folgt, dass vorzugsweise die Form der Mitnahmeklinge an die Form des Stellglieds angepasst ist, um ein effektives Ausstellen des Angriffsendes aus der axialen Aussparung und ein Zurückziehen des Angriffsendes in die axiale Aussparung zu realisieren.

Gemäß einer weiteren bevorzugten Ausführungsform des erfindungsgemäßen Werkzeugs umfasst der Antriebsabschnitt eine integrale oder eine getrennte Werkzeugaufnahme oder eine Spannzange mit Überwurfmutter, um die Einbauspindel zu befestigen. Gemäß einer weiteren bevorzugten Ausführungsform des erfindungsgemäßen Werkzeugs ist die Mitnahmeklinge austauschbar im Werkzeug befestigt. Zudem ist bevorzugt der Spindelkörper nicht integral mit der Werkzeugaufnahme oder der Spannzange verbunden und vorzugsweise ohne gleichzeitiges Entfernen des Stellglieds austauschbar. Diese austauschbare Anordnung gewährleistet, dass gerade die besonders verschleißempfindlichen Teile, wie die Einbauspindel und die Mitnahmeklinge, entfernbar bzw. austauschbar sind, ohne das komplette Werkzeug austauschen zu müssen. Dies wirkt sich positiv auf die Wartungskosten des vorliegenden Werkzeugs aus. Bei einem derartigen Austausch bleibt die Konstruktion und Anordnung des Stellglieds erhalten, sodass lediglich die mit dem Drahtgewindeeinsatz zusammenwirkenden Teile ausgetauscht werden müssen.

Vorliegende Erfindung offenbart zudem die Mitnahmeklinge für das Werkzeug zum Ein- oder Ausbauen von Drahtgewindeeinsätzen, die die folgenden Merkmale aufweist: einen langgestreckten Grundkörper mit einem ersten und einem zweiten Ende, wobei an dem ersten Ende ein Angriffsende und an dem zweiten Ende ein erstes und ein zweites V-förmig angeordnetes Federbein vorgesehen sind.

Vorzugsweise weisen das erste und das zweite Federbein endseitig jeweils einen lateralen Vorsprung auf, der eine Bewegung der Mitnahmeklinge im Werkzeug ermöglicht. Der bevorzugte laterale Vorsprung der V-förmig angeordneten Federbeine dient dazu, mit den bereits oben diskutierten Formmerkmalen der Einbauspindel zusammenzuwirken. Im Speziellen dient der eine laterale Vorsprung einem Halten der Mitnahmeklinge in dem radialen Durchbruch der Einbauspindel, um ein Lösen der Mitnahmeklinge aus der axialen Aussparung zu verhindern. Auf diese Weise bildet dieser laterale Vorsprung einen axialen Hinterschnitt entgegen der Installationsrichtung eines Drahtgewindeeinsatzes. Der weitere laterale Vorsprung der an dem weiter radial einwärts angeordneten Federbein der Mitnahmeklinge angeordnet ist, wirkt vorzugsweise mit dem Rückwärtsschieber des Stellglieds zusammen. Während sich der Rückwärtsschieber vorzugsweise in die axiale Aussparung der Einbauspindel, d.h. in Richtung des Antriebsabschnitts, bewegt, greift der Rückwärtsschieber an dem zweiten lateralen Vorsprung an und bewegt auf diese Weise die Mitnahmeklinge gemeinsam mit dem Stellglied in Richtung Antriebsabschnitt des Werkzeugs. Auf diese Weise wird zumindest das Angriffsende der Mitnahmeklinge in eine Ruheposition zurückbewegt bzw. aus dem Eingriff mit einem Drahtgewindeeinsatz gelöst.

Weiterhin bevorzugt weist der Grundkörper der Mitnahmeklinge benachbart zu den Federbeinen eine krummlinige Außenkontur auf, die als Kontaktfläche zum Bewegen der Mitnahmeklinge dient.

Vorliegende Erfindung umfasst des Weiteren ein Herstellungsverfahren für das Werkzeug zum Ein- oder Ausbauen eines Drahtgewindeeinsatzes. Dieses Herstellungsverfahren weist die folgenden Schritte auf: Herstellen eines Spindelkörpers mit einem Antriebsabschnitt und einem Aufnahmeabschnitt mit Gewinde oder einer gewindelosen Oberfläche, Erzeugen einer axialen Aussparung innerhalb des gesamten Spindelkörpers, vorzugsweise mit einem einseitigen radialen Fenster, Herstellen eines langgestreckten Stellglieds und Anordnen des Stellglieds in der axialen Aussparung, Herstellen einer Mitnahmeklinge mit einem langgestreckten Grundkörper mit einem ersten und einem zweiten Ende, wobei an dem ersten Ende ein Angriffsende und an dem zweiten Ende ein erstes und ein zweites V-förmig angeordnetes Federbein vorgesehen sind, und manuell lösbares Verbinden der Mitnahmeklinge über eine Befestigungsverbindung innerhalb der axialen Aussparung.

Gemäß einer weiteren bevorzugten Ausgestaltung des erfindungsgemäßen Herstellungsverfahrens wird ein radialer Durchbruch im Spindelkörper erzeugt, über den die Mitnahmeklinge manuell lösbar ist und in dem die Mitnahmeklinge lösbar gehalten ist. Gemäß einer weiteren bevorzugten Ausgestaltung des Herstellungsverfahrens erfolgt ein Befestigen des Stellglieds in der Aussparung über ein in einem Langloch des Stellglieds geführtes Blockiermittel, sodass die axiale Bewegung des Stellglieds begrenzt ist. Zudem ist es innerhalb des Herstellungsverfahrens bevorzugt, eine Werkzeugaufnahme oder eine Spannzange mit Überwurfmutter im Antriebsabschnitt des Spindelkörpers anzuordnen.

Des Weiteren umfasst vorliegende Erfindung ein Verfahren zum Wechseln der Mitnahmeklinge in dem Werkzeug zum Ein- oder Ausbauen eines Drahtgewindeeinsatzes. Das Werkzeug weist dabei die folgenden Merkmale auf: einen Spindelkörper mit einem Antriebsabschnitt, über den der Spindelkörper um eine Längsachse drehbar ist, einen endseitig und abgewandt vom Antriebsabschnitt angeordneten Aufnahmeabschnitt, in dem ein Gewinde zum Aufdrehen oder eine gewindelose Oberfläche zum Aufstecken des Drahtgewindeeinsatzes auf den Aufnahmeabschnitt vorgesehen ist, und einer axialen Aussparung, die sich im Inneren des Spindelkörpers über eine Länge erstreckt, eine Mitnahmeklinge, mit einem Angriffsende, die in der axialen Aussparung zumindest im Bereich des Aufnahmeabschnitts zumindest axial versetzbar angeordnet ist, und ein langgestrecktes Stellglied, das innerhalb der axialen Aussparung in Längsrichtung bewegbar angeordnet ist, sodass das Angriffsende der Mitnahmeklinge über das Stellglied zwischen einer ersten Position innerhalb des Spindelkörpers und einer zweiten Position außerhalb des Spindelkörpers versetzbar ist. Das Verfahren zum Wechseln der Mitnahmeklinge weist die folgenden Schritte auf: Lösen eines Federbeins der Mitnahmeklinge aus einem radialen Durchbruch des Spindelkörpers, Herausziehen der Mitnahmeklinge aus der axialen Aussparung und manuelles Einsetzen und Befestigen einer anderen Mitnahmeklinge in der axialen Aussparung des Aufnahmeabschnitts, bei dem das erste Federbein der Mitnahmeklinge im radialen Durchbruch einrastet.

Das erfindungsgemäße Werkzeug und auch seine bevorzugten Ausführungsformen haben den Vorteil, dass die Mitnahmeklinge lediglich federnd formschlüssig innerhalb der axialen Aussparung der Einbauspindel befestigt ist. Dies eröffnet die Möglichkeit, dass die Mitnahmeklinge ohne die Verwendung von automatischem Werkzeug oder manuellem Werkzeug aus der Einbauspindel entfernbar ist. Es ist lediglich erforderlich, mithilfe eines Installationsstiftes die Halteverbindung zwischen dem einen Federbein der Mitnahmeklinge und dem radialen Durchbruch der Einbauspindel zu lösen, um die Mitnahmeklinge an der Stirnseite der Einbauspindel am Aufnahmeabschnitt manuell aus der axialen Aussparung heraus ziehen zu können. Dieser Vorgang wird deshalb als werkzeugloser Vorgang betrachtet, weil mit dem verwendeten Deinstallationsstift keinerlei ernsthafte Kräfte auf die Mitnahmeklinge aufgebracht oder Befestigungsmittel über spezielle Antriebsmittel oder dergleichen gelöst werden müssen. Denn der Deinstallationsstift dient lediglich einem Lösen eines federnd hergestellten Hinterschnitts und somit einer wirkenden Halteverbindung zwischen einem Federbein der Mitnahmeklinge und einem Rand des radialen Durchbruchs der Einbauspindel. Da dieser Deinstallationsstift vernachlässigbar kleine Kräfte im Vergleich zur Mitnahmeklinge aufbringen muss, ist er beispielsweise mithilfe eines Streichholz, eines Kunststoffstiftes oder einer ähnlichen Konstruktion realisierbar, die nicht als Werkzeug bezeichnet werden können.

Weiterhin offenbart vorliegende Erfindung ein Verfahren zum Wechseln eines Spindelkörpers in einem Werkzeug zum Ein- oder Ausbauen eines Drahtgewindeeinsatzes, das die folgenden Merkmale aufweist: den Spindelkörper mit einem Antriebsabschnitt, über den der Spindelkörper um eine Längsachse drehbar ist und der nicht integral mit einer Werkzeugaufnahme oder einer Spannzange verbunden ist, einem endseitig und abgewandt vom Antriebsabschnitt angeordneten Aufnahmeabschnitt, in dem ein Gewinde zum Aufdrehen oder eine gewindelose Oberfläche zum Aufstecken des Drahtgewindeeinsatzes auf den Aufnahmeabschnitt vorgesehen ist, und mit einer axialen Aussparung, die sich im Inneren des Spindelkörpers über eine Länge erstreckt, eine Mitnahmeklinge mit einem Angriffsende, die in der axialen Aussparung zumindest im Bereich des Aufnahmeabschnitts zumindest axial versetzbar angeordnet ist, und ein langgestrecktes Stellglied, das innerhalb der axialen Aussparung in Längsrichtung bewegbar angeordnet ist, sodass das Angriffsende der Mitnahmeklinge über das Stellglied zwischen einer ersten Position innerhalb des Spindelkörpers und einer zweiten Position außerhalb des Spindelkörpers versetzbar ist, wobei das Verfahren die folgenden Schritte aufweist: Entfernen der Mitnahmeklinge aus der axialen Aussparung des Spindelkörpers, Lösen der Werkzeugaufnahme oder der Spannzange, die den Spindelkörper drehfest am Antriebsabschnitt hält, und Entfernen des Spindelkörpers vom Werkzeug, vorzugsweise ohne dass das Stellglied des Werkzeugs deinstalliert werden muss, und Einsetzen und Befestigen eines neuen Spindelkörpers in der Werkzeugaufnahme oder Spannzange.

Im Vergleich zu bekannten Einbauwerkzeugen ist der Spindelkörper nicht integral mit der Werkzeugaufnahme ausgebildet. Zwar ist der Spindelkörper mit einer Werkzeugaufnahme oder einer Spannzange oder einer andere Kopplung an einen Drehantrieb fest verbunden, aber diese Verbindung ist auf einen ohne Aufwand lösbaren Bereich im Antriebsabschnitt beschränkt. Diese Verbindung stellt eine drehfeste Verbindung sowie bevorzugt eine reibschlüssige Verbindung zum Spindelkörper her. Bevorzugt unabhängig vom zentral bewegbar angeordneten Stellglied ist der Spindelkörper aus der Verbindung lösbar, entsprechend entfernbar und durch einen neuen Spindelkörper austauschbar. Während also das übrige Werkzeug Bestand hat, ist der Spindelkörper austauschbar. Damit kann Verschleiß am Spindelkörper beseitigt werden, ohne das komplette Werkzeug auszutauschen oder aufwändig zerlegen zu müssen. Denn den Spindelkörper hält ein kombinierter Form-Reibschluss, bei dem der Antriebsabschnitt nach einem Aufstecken der Axialnut auf einen Stift oder Vorsprung reibschlüssig geklemmt wird.

Vorliegende Erfindung offenbart zudem ein Installationsverfahren für einen Drahtgewindeeinsatz in einer Gewindeöffnung mithilfe des oben beschriebenen Werkzeugs in einer der verschiedenen bevorzugten Ausführungsformen. Dieses Installationsverfahren weist die folgenden Schritte auf: Anordnen des Drahtgewindeeinsatzes im Aufnahmeabschnitt des Spindelkörpers, Eindrehen des Drahtgewindeeinsatzes durch Drehen des Spindelkörpers in die Gewindeöffnung in eine Installationsrichtung, Versetzen des Stellglieds innerhalb des Spindelkörpers in Installationsrichtung und Bewegen eines Angriffsendes der Mitnahmeklinge in die zweite Position außerhalb des Spindelkörpers, Versetzen des Einbauzapfens aus einer Anfangsposition radial auswärts und Ausdrehen oder heraus Ziehen des Spindelkörpers aus dem Drahtgewindeeinsatz. Alternativ dazu ist es ebenfalls bevorzugt, folgendes Installationsverfahren zu nutzen: Anordnen des Drahtgewindeeinsatzes im Aufnahmeabschnitt des Spindelkörpers, Versetzen des Stellglieds innerhalb des Spindelkörpers in Installationsrichtung und Bewegen eines Angriffsendes der Mitnahmeklinge in Eingriff mit dem Drahtgewindeeinsatz, Eindrehen des Drahtgewindeeinsatzes durch Drehen des Spindelkörpers in die Gewindeöffnung in eine Installationsrichtung, Ausdrehen oder heraus Ziehen des Spindelkörpers aus dem Drahtgewindeeinsatz. Im Zusammenhang mit beiden Installationsverfahren ist ein axiales Versetzen des Stellglieds entgegen der Installationsrichtung und Lösen des Angriffsendes der Mitnahmeklinge aus dem Eingriff mit dem Drahtgewindeeinsatz bevorzugt

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Ansicht einer ersten bevorzugten Ausführungsform des Werkzeugs,
- Figur 2: eine Schnittdarstellung des Werkzeugs gemäß Figur 1, in der eine Werkzeugaufnahme integral mit dem Spindelkörper verbunden ist,
- Figur 3: eine vergrößerte Darstellung des Aufnahmeabschnitts des Werkzeugs aus Figur 2 mit aufgeschraubtem Drahtgewindeeinsatz,
- Figur 4: eine seitliche Darstellung einer bevorzugten Ausführungsform der Mitnahmeklinge des Werkzeugs aus Figur 2,
- Figur 5: eine seitliche Darstellung in Kombination mit einer axialen Schnittdarstellung des Werkzeugs aus Figur 1 ohne Stellglied und Mitnahmeklinge,
- Figur 6: eine seitliche Darstellung einer bevorzugten Ausführungsform des Stellglieds des Werkzeugs aus Figur 1,
- Figur 7a, b: (a) eine vergrößerte Darstellung des viereckig abgegrenzten Bereich aus Figur 5 sowie (b) eine stirnseitige Frontansicht des Stellglieds gemäß der vergrößerten Darstellung in Bild a,
- Figur 8: eine weitere bevorzugte Ausführungsform des Werkzeugs aus Figur 11 in einer seitlichen reduzierten Darstellung,
- Figur 9: eine Schnittdarstellung des Werkzeugs aus Figur 8,
- Figur 10: eine perspektivische Darstellung einer bevorzugten Ausführungsform des Spindelkörpers des Werkzeugs gemäß Figur 8 und 12,
- Figur 11: eine seitliche Darstellung des bevorzugten Werkzeugs gemäß Figur 8 mit Spannzange und Überwurfmutter,
- Figur 12: eine weitere bevorzugte Ausführungsform des Werkzeugs in einer seitlichen Schnittdarstellung,
- Figur 13: eine perspektivische Darstellung des Werkzeugs aus Figur 12,

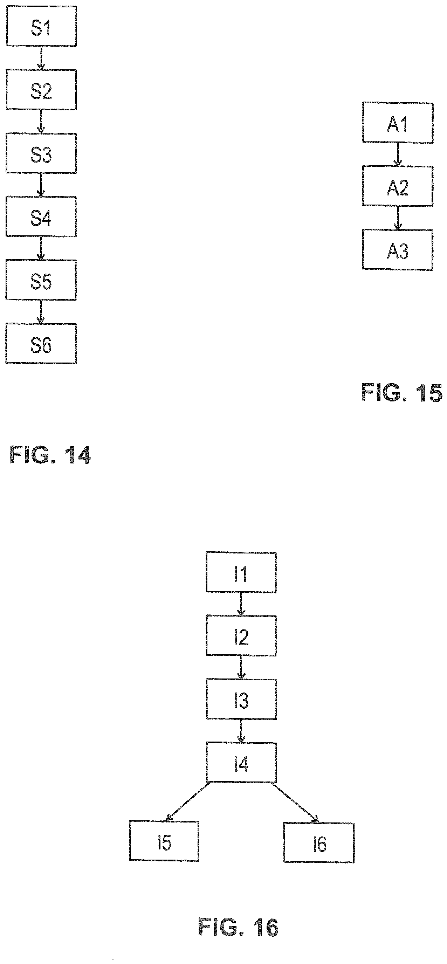

- Figur 14: ein Flussdiagramm einer bevorzugten Ausführungsform des erfindungsgemäßen Herstellungsverfahrens des Werkzeugs,
- Figur 15: ein Flussdiagramm einer bevorzugten Ausführungsform eines Verfahrens zum Wechseln einer Mitnahmeklinge im erfindungsgemäßen Werkzeug und
- Figur 16: ein Flussdiagramm einer bevorzugten Ausführungsform eines Verfahrens zum Installieren eines Drahtgewindeeinsatzes.

### 5. Detaillierte Beschreibung der bevorzugten Ausführungsformen

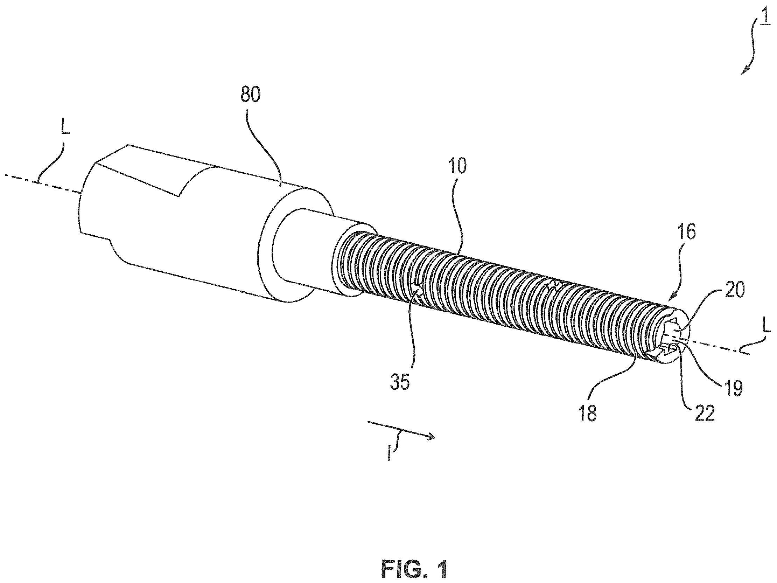

Das erfindungsgemäße Werkzeug 1; 1'; 1" ist in verschiedenen Ausführungsformen in den Figuren 1, 11 und 12 beispielgebend dargestellt. Es zeichnet sich durch eine aus einem Spindelkörper 10 ausstellbare Mitnahmeklinge 50 aus. Ein Angriffsende 52 der Mitnahmeklinge 50 wird mithilfe dieser Bewegbarkeit in Eingriff gebracht oder aus einem Eingriff mit einem Drahtgewindeeinsatz D gelöst. Diese mechanische Wirkverbindung zwischen Mitnahmeklinge 10 und Drahtgewindeeinsatz D gewährleistet eine Übertragung einer Drehbewegung vom Werkzeug 1; 1'; 1" auf den Drahtgewindeeinsatz D. Dadurch ist das Werkzeug 1; 1'; 1" zum Installieren eines Drahtgewindeeinsatzes D in einer Gewindeöffnung eines Bauteils in gleicher Weise geeignet wie zum Ausbauen eines Drahtgewindeeinsatzes D aus einer Gewindeöffnung. Entsprechend stellt das Werkzeug 1; 1'; 1" ein Installationswerkzeug und/oder ein Deinstallationswerkzeug für Drahtgewindeeinsätze dar, das bevorzugt eine formschlüssige Wirkverbindung zum Drahtgewindeeinsatz D herstellt.

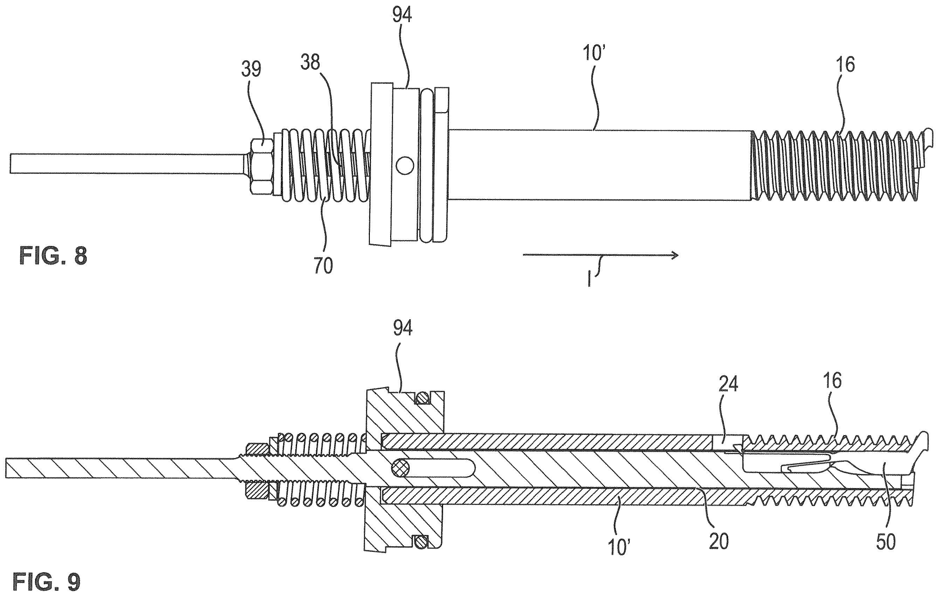

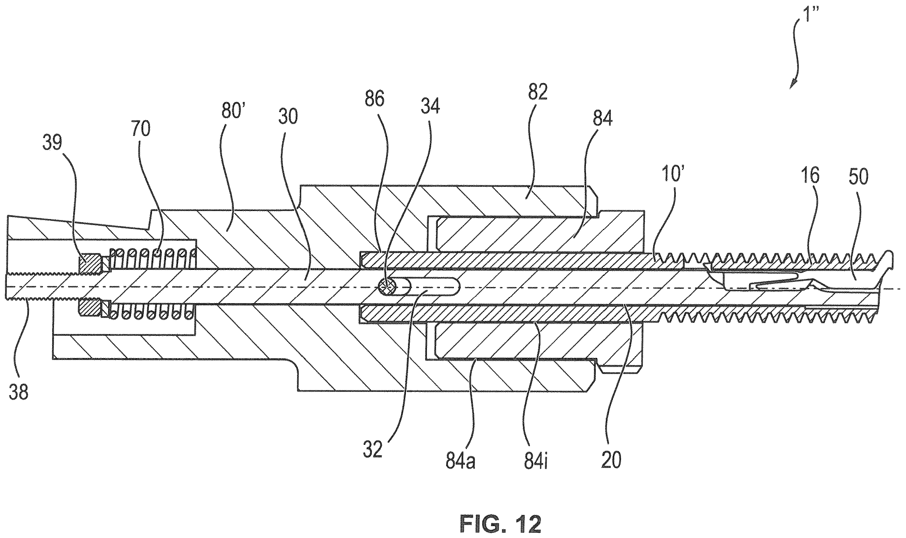

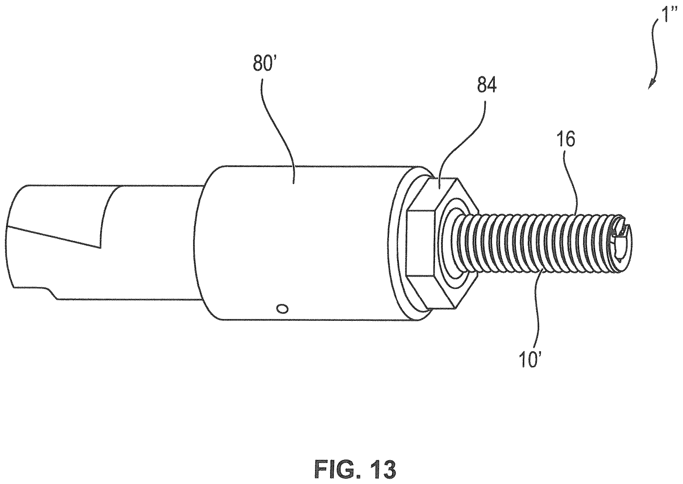

Der Spindelkörper 10; 10' umfasst einen Antriebsabschnitt 12; 12', um den Spindelkörper 10; 10' um seine Längsachse L zu drehen. Der Antriebsabschnitt 12; 12' weist dazu zumindest eine formschlüssige, bevorzugt eine kombinierte formschlüssige und kraftschlüssige, Verbindung zwischen dem Spindelkörper 10; 10' und einer Werkzeugaufnahme 80 (siehe Figuren 12 und 13), ein Spannfutter 90 mit Überwurfmutter 92 (siehe Figuren 8 bis 11) oder einen integralen Spindelkörper mit Werkzeugaufnahme 80 gemäß Figur 1, 2, 5 auf.

Der Antriebsabschnitt 12 besitzt an seinem stirnseitigen Ende des Spindelkörpers 10; 10' eine Axialnut 14. Die Axialnut 14 bildet mit einem in die Axialnut 14 eingreifenden Stift oder einem radialen Vorsprung eine formschlüssige Verbindung. Diese formschlüssige Verbindung stellt eine drehfeste Kopplung zwischen dem Spindelkörper 10; 10' und der Werkzeugaufnahme 80 oder der Spannzange 90 oder allgemein mit einer Antriebskomponente (nicht gezeigt) dar. Damit ist die Drehbewegung der Werkzeugaufnahme 80, der Spanzange 90 oder der Antriebskomponente auf den Spindelkörper 10; 10' übertragbar. Vorzugsweise dient die Axialnut 14 auch als Positionierhilfe für den Spindelkörper 10; 10' in der Werkzeugaufnahme 80 oder der Spannzange 90 oder allgemein in der Antriebskomponente. Sobald der Spindelkörper 10; 10' in eine Aufnahme 17 der Werkzeugaufnahme 80 oder der Spannzange 90 oder allgemein der Antriebskomponente eingesetzt wird, gewährleistet der genannte Stift oder der radiale Vorsprung bevorzugt eine konzentrische Einspannung des Spindelkörpers 10; 10' bezogen auf die Werkzeugaufnahme und den Antrieb des Spindelkörpers 10; 10'.

Der Antriebsabschnitt 12 stellt zudem stirnseitig bevorzugt einen Befestigungsbereich 14 bereit, sodass der Spindelkörper 10; 10' lösbar in der Werkzeugaufnahme 80 oder der Spannzange 90 oder allgemein in der Antriebskomponente befestigbar ist. Die Befestigung des Spindelkörpers 10; 10' ist unabhängig von einer axialen Länge des Spindelkörpers 10, 10' realisierbar. Daher sind die Spindelkörper 10; 10' unterschiedlicher Länge angepasst an den jeweiligen Anwendungsfall drehfest befestigbar, wobei sie gleichzeitig lösbar und damit einfach austauschbar sind. Diese Lösbarkeit gilt nicht für einen Spindelkörper 10; 10', der integral mit der Werkzeugaufnahme 80 ausgebildet ist. Diese Austauschbarkeit ist von Vorteil, da durch die Zahl der Installations- oder Deinstallationsvorgänge ein Aufnahmeabschnitt 16 des Spindelkörpers 10; 10' abgenutzt oder beschädigt wird, was einen Austausch des Spindelkörpers 10; 10' erforderlich macht. Somit ist es nicht nötig, das gesamte Werkzeug 1; 1' auszutauschen, sondern man wechselt lediglich den Spindelkörper 10; 10' aus.

Gegenüber vom Antriebsabschnitt 12 ist am zweiten axialen Ende des Spindelkörpers 10; 10' der Aufnahmeabschnitt 16 vorgesehen. Der Aufnahmeabschnitt 16 weist ein Gewinde 18 auf. Hier wird ein Drahtgewindeeinsatz während eines Installations- oder eines Deinstallationsverfahrens aufgespindelt und abgespindelt. Gemäß einer weiteren bevorzugten Ausführungsform weist der Aufnahmeabschnitt 16 eine gewindelose Fläche (nicht gezeigt) zum Aufstecken eines Drahtgewindeeinsatzes auf. Nach dem Aufstecken des Drahtgewindeeinsatzes auf dem Aufnahmeabschnitt 16 während des Installations- oder Deinstallationsverfahrens gewährleistet ein Formschluss mit der Mitnahmeklinge 50 dann das Installieren und/oder Deinstallieren des Drahtgewindeeinsatzes durch Drehen des Spindelkörpers 10; 10'.

Der Aufnahmeabschnitt 16 hat zudem bevorzugt eine stirnseitige Öffnung 19, durch die ein Angriffsende 52 der Mitnahmeklinge 50 in eine Installationsrichtung I für Drahtgewindeeinsätze nach außen bewegt werden kann und zurück. Die Öffnung 19 ist umgeben von einer ringförmigen Fläche des Spindelkörpers 10; 10', die bevorzugt mindestens eine Rastschulter und/oder mindestens eine Rastnut zum Halten eines Einbauzapfens eines Drahtgewindeeinsatzes aufweist.

Gemäß einer weiteren bevorzugten Ausgestaltung des Aufnahmeabschnitts 16 ist ein radiales Fenster vorgesehen. Dieses radiale Fenster ermöglicht ein gezieltes Ausstellen des Angriffsendes 52 der Mitnahmeklinge 52 radial auswärts aus dem Spindelkörper 10; 10' heraus, um in eine Kerbe eines Drahtgewindeeinsatzes eingreifen zu können. Die unterschiedlichen Gestaltungsformen des Aufnahmeabschnitts 16 sind in DE 10 2010 050 735 A1 und in DE 10 2011 051 846 A1 beschrieben, die hiermit durch Bezugnahme aufgenommen sind.

Der Spindelkörper 10; 10' weist in seinem Inneren eine axiale Aussparung 20 auf. Die axiale Aussparung 20 erstreckt sich über die vollständige Länge des Spindelkörpers 10; 10', sodass ein langgestrecktes Stellglied 30 und die Mitnahmeklinge 50 innerhalb der Aussparung 20 angeordnet werden können.

Um innerhalb der axialen Aussparung Stütz- und/oder Führungsflächen für das Stellglied 30 und/oder die Mitnahmeklinge 50 bereitzustellen, ist die innere Form der Aussparung 20 bevorzugt an die äußere Form des Stellglieds 30 und/oder der Mitnahmeklinge 50 angepasst. Weist beispielsweise das Stellglied 30 einen rechteckigen Querschnitt auf, dann sind an einer Innenfläche der axialen Aussparung 20 zumindest über axiale Teilbereiche Führungsnuten und/oder radiale Anschlagflächen 22 für das Stellglied 30 vorgesehen. Radiale Anschlagfläche bedeutet, dass die Fläche in einer Radialebene oder benachbart zu einer Radialebene liegt.

In weiterer bevorzugter Ausgestaltung der Aussparung 20 ist zumindest eine erste Radialnut im Aufnahmeabschnitt 16 vorgesehen, die teilweise durch die Anschlagfläche 22 gebildet wird. Die Radialnut stützt und positioniert die Mitnahmeklinge 50, die unten näher erläutert ist.

Ergänzend oder alternativ zu den Führungsnuten und/oder Anschlagflächen 22 wird das Stellglied 20 über eine Stift-Langloch-Verbindung 32, 34 in der axialen Aussparung 20 ausgerichtet, in seiner Bewegung geführt sowie in seiner Bewegung begrenzt. Dazu weist das Stellglied 30 vorzugsweise ein Langloch 32 auf, das parallel zur Längsachse des Stellglieds 30 verläuft. Dieses Langloch 32 durchgreift bevorzugt ein Stift 34 oder ein ähnliches Arretiermittel, wie ein radialer Vorsprung in der Aussparung 20. Der Stift 34 ist vorzugsweise in entsprechenden Öffnungen 35 des Spindelkörpers 10; 10' lösbar befestigt, beispielsweise vernietet, geklebt, eingepresst, eingeschraubt. Aufgrund der Stift-Langloch-Verbindung ist die axiale Bewegungsfreiheit des Stellglieds 30 begrenzt und an die nötigen Stellwege für die Mitnahmeklinge 50 angepasst. Zudem erzeugt die Stift-Langloch-Verbindung 32, 34 eine Lageorientierung des Stellglieds 30 in der Aussparung 20.

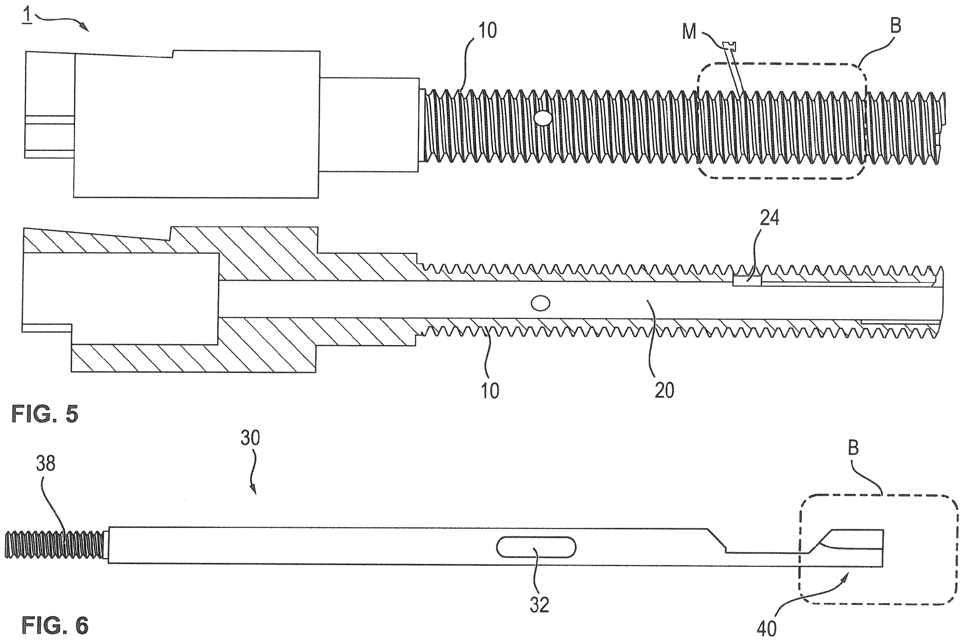

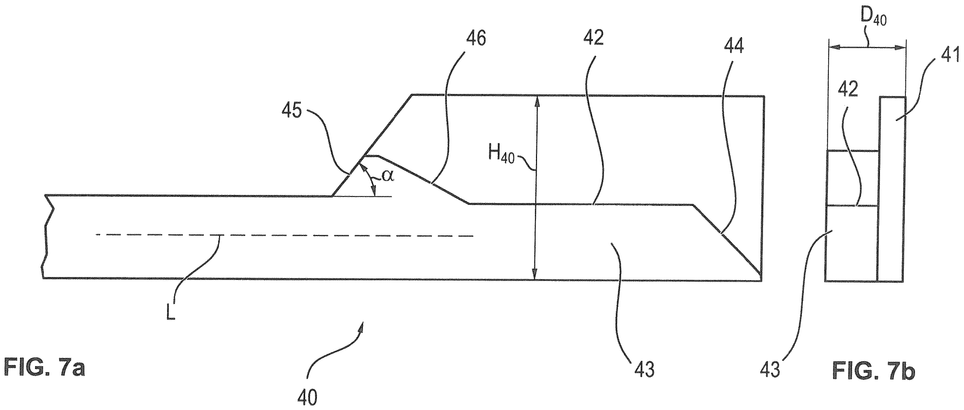

Figur 5 hebt durch einen viereckig abgegrenzten Bereich B einen Abschnitt in der Aussparung 20 hervor, in dem die axiale Bewegung des Stellglieds 30 unterschiedliche Stellbewegungen der Mitnahmeklinge 50 bewirkt. Dazu sind in Figur 6 der Bereich B nur in Kombination mit dem Stellglied 30 und in Figur 7a eine vergrößerte Darstellung eines stellenden Endbereichs 40 des Stellglieds 30 dargestellt. Ergänzend dazu zeigt Figur 7b eine stirnseitige Draufsicht auf die Stirnseite des Stellglieds 30, die benachbart zur Öffnung 19 des Spindelkörpers 10 angeordnet ist.

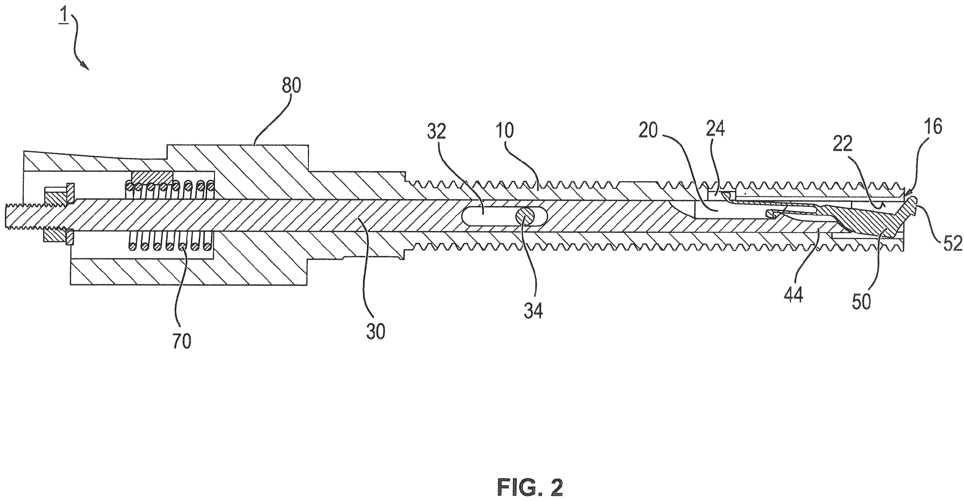

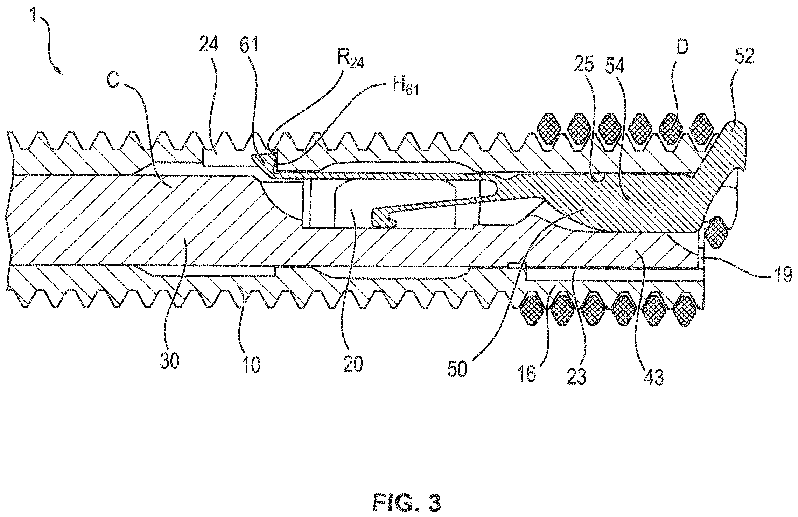

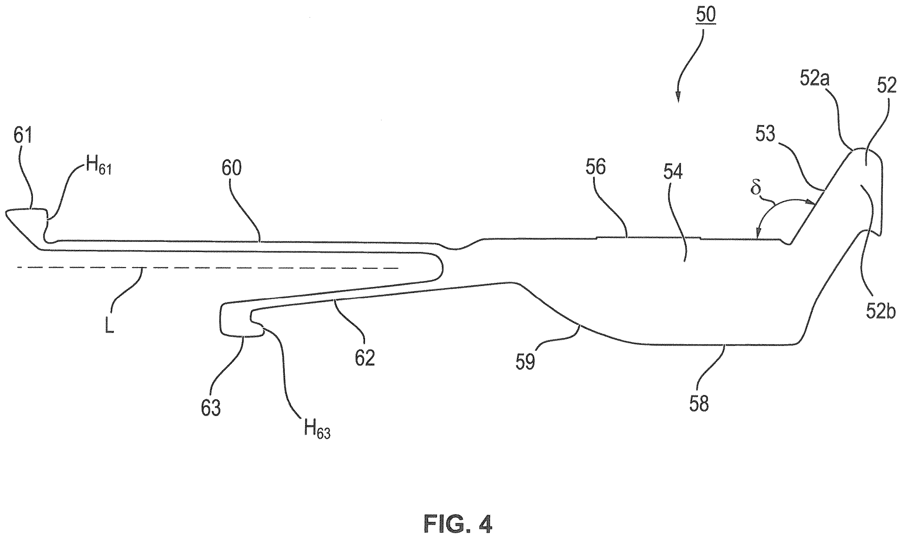

Wie man anhand der Figuren 2-4 und 7 erkennen kann, sind die geometrischen Gestaltungen der Mitnahmeklinge 50 und des Stellglieds 30 im stellenden Endbereich 40 aneinander angepasst. Allgemein weist die Mitnahmeklinge 50 gemäß Figur 4 einen langestreckten Grundkörper 54 auf. An einem ersten Ende ist das Angriffsende 52 vorgesehen. In Abhängigkeit von der Konstruktion des zu installierenden und/ oder zu deinstallierenden Drahtgewindeeinsatzes (siehe oben) steht das Angriffsende 52 in radialer und/ oder in axialer Richtung vom Grundkörper 4 vor. Es ist ebenfalls bevorzugt, dass das Angriffsende 52 in einem Winkel δ geneigt bezogen auf den Grundkörper 54 vorsteht. In Abhängigkeit von der Form des Angriffsendes 52 stellt es eine Eingriffsspitze 52a und/oder eine Stauchfläche 52b bereit.

Der Grundkörper 54 hat vorzugsweise eine geradlinig und parallel zu einer Längsachse der Mitnahmeklinge 50 verlaufende erste Stützkante 56, die benachbart zum Angriffsende 52 angeordnet ist. Die Stützkante 56 greift vorzugsweise in eine Axialnut 14 der Aussparung 20 ein oder an einer radial angeordneten Anschlagsfläche 22 an. Eine der ersten Stützkante 56 gegenüber angeordnete zweite Stützkante 58 wird bevorzugt durch eine abgestufte Anlagefläche 42 des Stellglieds 30 gehalten und unterstützt. Dazu ist das Stellglied 30 zumindest im Endbereich 40 abgestuft ausgebildet, wenn man den Querschnitt des Stellglieds 30 oder die stirnseitige Draufsicht auf das Stellglied 30 gemäß Figur 7a betrachtet. Bezogen auf eine Dicke D₄₀ des Stellglieds 30 im stellenden Bereich 40 quer zur Längsachse des Stellglieds 30 erstreckt sich ein erster Teilbereich 41 davon über die vollständige Höhe H₄₀ des Stellglieds 30. Die vollständige Höhe H₄₀ ist an die Ausdehnung der Aussparung 20 angepasst, sodass das Stellglied 30 in der Aussparung 20 bevorzugt anliegt und führbar ist. Ein zweiter Teilbereich 43 erstreckt sich nur über einen Bruchteil des Höhe H₄₀. Der Teilbereich 43 erstreckt sich in axialer Richtung des Stellglieds 30 über verschiedene Höhen quer zur Längsachse des Stellglieds 30. Der Teilbereich 43 wird radial einwärts durch die Anlagefläche 42 begrenzt. Da die Stützkante 58 der Mitnahmeklinge 50 auf der stufenförmigen Anlagefläche 42 aufliegt und die Mitnahmeklinge 50 durch den Teilbereich 41 geführt wird, ist die Mitnahmeklinge 50 verlässlich in der Aussparung angeordnet.

Die Stützkante 58 verläuft in Längsrichtung L der Mitnahmeklinge 50 abgewandt vom Angriffsende 52 in krummliniger Richtung. Dadurch verjüngt sich der Grundkörper 54 bevorzugt, da die Stützkante 58 krummlinig, bevorzugt bogenförmig, im Bereich 59 auf die Stützkante 56 zuläuft.

Gegenüber dem Angriffsende 52 geht der Grundkörper 54 in ein erstes 60 und ein zweites Federbein 62 über. Diese schließen bevorzugt einen spitzen Winkel ein und sind damit V-förmig zueinander angeordnet. Das Federbein 60 ist vorzugsweise an der gleichen Längsseite der Mitnahmeklinge 50 wie das Angriffsende 52 angeordnet. Es besitzt gemäß einer bevorzugten Ausführungsform einen lateralen Vorsprung 61, der sich parallel zur Höhe H₄₀ erstreckt. Der laterale Vorsprung 61 bildet einen Hinterschnitt H₆₁ in axialer Richtung der Mitnahmeklinge 50 und des Spindelkörpers 10; 10'. Der laterale Vorsprung 61 greift vorzugsweise in ein Radialfenster 24 des Spindelkörpers 10; 10' ein. Der Hinterschnitt H₆₁ verhindert einen axialen Versatz der Mitnahmeklinge 50 aus der Öffnung 19 heraus, indem er eine formschlüssige Verbindung mit einem Randbereich R24 des Radialfensters 24 bildet. Dies ist gerade dann erforderlich, wenn das Stellglied 30 in Richtung Öffnung 19 des Spindelkörpers 10; 10' versetzt wird, um das Angriffsende 52 aus dem Spindelkörper 10; 10' auszustellen.

Während der genannten Ausstellbewegung des Angriffsendes 52 wird ein sich über die Höhe H₄₀ erstreckender Teilbereich C des Stellglieds 30 seitlich neben den lateralen Vorsprung 61 bewegt. Dadurch blockiert das Stellglied 30 mit dem Bereich C den Vorsprung 61 gegen eine Bewegung radial einwärts bezogen auf den Spindelkörper 10; 10'. Dies verhindert ein Lösen des Vorsprungs 61 aus dem Radialfenster 24, sodass die Mitnahmeklinge 50 verlässlich in der Aussparung 50 gehalten ist.

Sobald der Vorsprung 61 aus dem Radialfenster 24 manuell oder mithilfe eines Montagehebels oder Montagestifts M radial einwärts aus dem Eingriff mit dem Radialfenster 24 gelöst wird, ist die Mitnahmeklinge 50 aus der Aussparung 20 entfernbar. Dies ist in einer Ausgangsposition des Stellglieds 30 möglich, die in Figur 2 gezeigt ist. In der Ausgangsposition befindet sich das Stellglied 30 innerhalb der Aussparung 20 in Richtung des Antriebsabschnitts 12 versetzt. In dieser Position ist das Federbein 60 radial einwärts bewegbar, da das Stellglied 30 mit einem verjüngten Bereich 36 benachbart zum Vorsprung 61 angeordnet ist. Wurde der Vorsprung 61 aus dem Radialfenster 24 gelöst, wird das Stellglied 30 axial in Richtung Öffnung 19 bewegt. Bei dieser Bewegung greift ein Vorwärtsschieber 44 als geneigter Teilbereich der Anlagefläche 42 im Bereich 59 der Mitnahmeklinge 50 an und versetzt die Mitnahmeklinge 50 in Richtung Öffnung 19. Dazu sind bevorzugt die Neigungen des Bereichs 59 und des Vorwärtsschiebers 54 derart aneinander angepasst, dass eine effektive Kraft und Bewegungsübertragung vom Stellglied 30 auf die Mitnahmeklinge 50 erfolgt. Sobald das Angriffsende 52 axial aus der Öffnung 19 herausragt, kann es manuell oder mit einem Werkzeug gegriffen bzw. gehalten werden.

Die Mitnahmeklinge 50 wird noch über einen lateralen Vorsprung 63 am Federbein 62 gehalten, der sich in entgegengesetzter Richtung verglichen mit dem Vorsprung 61 erstreckt. Der laterale Vorsprung 63 bildet ebenfalls einen Hinterschnitt H₆₃, der mit einem Rückwärtsanschlag 45 des Stellglieds 30 zusammenwirkt. Der Rückwärtsanschlag 45 stellt bevorzugt eine geneigte Ebene dar, die in einem Winkel α zur Längsachse des Stellglieds im Bereich von 30 ° ≤ α ≤ 135 ° geneigt ist, vorzugsweise in einem Bereich von 45 ° ≤ α ≤ 90 ° und weiter bevorzugt in einem Winkel α von 78 ° zur Längsachse L des Stellglieds 30.

Trotz der Blockade des Vorsprungs 63 durch den Rückwärtsanschlag 45 gleitet der Vorsprung 63 ab einer Schwellenzugkraft auf die Mitnahmeklinge 50 axial in Richtung Öffnung 19 über den Rückwärtsanschlag 45 hinweg. Diese Zugkraft wird bevorzugt über das Angriffsende 52 aufgebracht. Die Zugkraft bewirkt, dass das Federbein 62 über den Vorsprung 63 und den Rückwärtsanschlag 45 radial einwärts versetzt wird und den Rückwärtsanschlag 45 überwinden kann. Danach kann die Mitnahmeklinge 50 vollständig aus der Aussparung 20 entfernt werden.

Um die Mitnahmeklinge 50 in dem Spindelkörper 10; 10' einzusetzen, wird zunächst die Spreizung der Federbeine 60, 62 verringert, damit die Federbeine 60, 62 in die Öffnung 19 einsetzbar sind. Zudem wird das Stellglied 30 bevorzugt maximal in Richtung Öffnung 19 versetzt. Beim Einstecken der Mitnahmeklinge 50 in die Öffnung 19 gleiten die Federbeine 60, 62 zunächst über eine Ausstellschräge 46. Die Ausstellschräge 46 ist eine Teilfläche der Anlagefläche 42, die in Richtung Antriebsabschnitt 12 geneigt angeordnet ist. Sie bildet die Rückseite des Rückwärtsanschlags 45, wie in Figur 7 gezeigt ist.

Sobald die Federbeine 60, 62 der Mitnahmeklinge 50 durch axialen Druck auf das Antriebsende 52 die Ausstellschräge 56 überwunden haben, federn sie in ihre Ausgangsstellung zurück. Dadurch liegt bevorzugt das Federbein 60 an der radialen Innenseite 25 der Aussparung 20 an. Das Federbein 62 federt in einen Bereich D, der nur einen Bruchteil der Höhe H₄₀ des Stellglieds 30 aufweist. Das Stellglied 30 wird mit der Mitnahmeklinge 50 in Richtung Antriebsabschnitt 12 soweit verschoben, bis der Vorsprung 61 in das Radialfenster 24 einschnappt. Wird das Stellglied 30 weiter in Richtung Antriebsabschnitt 12 verschoben, greift der Rückwärtsanschlag 45 am Vorsprung 63 an und führt die Mitnahmeklinge 50 weiter in die axiale Aussparung 20. Dieser Zustand ist in Figur 2 gezeigt. Das Angriffsende 52 der Mitnahmeklinge 50 ist bevorzugt in einem stumpfen Winkel δ zur Längsachse L der Mitnahmeklinge geneigt angeordnet. Eine am Angriffsende 52 angeordnete geneigte Gleitfläche 52 gleitet daher bevorzugt beim Bewegen der Mitnahmeklinge 50 am Rand der Öffnung 19 des Spindelkörpers 10; 10 entlang.

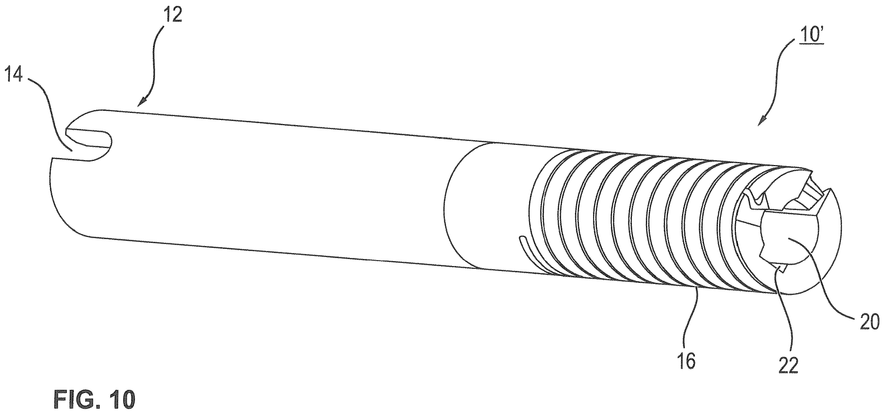

Während der Bewegung des Stellglieds 30 in Richtung Öffnung 19 bewegt der Vorwärtsschieber 44 die Mitnahmeklinge 50 in Richtung Öffnung 19. Dazu stützt sich der Vorwärtsschieber 44 im Bereich 59 ab. Sobald der Vorsprung 61 im Radialfenster 24 blockiert wird, gleitet der Bereich 59 der Mitnahmeklinge auf die Anlagefläche 42, sodass sich die Stützkante 58 der Mitnahmeklinge auf der Anlagefläche 42 abstützt. Dadurch wird das Angriffsende 52 radial nach außen versetzt, bis sich der Teilbereich 43 vollständig zwischen Grundkörper und 54 und radiale Innenwand 23 der Aussparung 20 geschoben hat. In dieser Installationsposition wird die Mitnahmeklinge 50 zwischen der Anlagefläche 42 des Stellglieds 30 und der radialen Innenwand 23 der Aussparung 20 stabil gehalten. Denn neben der Unterstützung durch die radiale Innenwand 25 und die Anlagefläche 42 stabilisieren die radialen Anschlagflächen 22 (siehe Figur 10) ohne die entsprechenden Radialnuten in der Aussparung 20 die Position der Mitnahmeklinge 50.

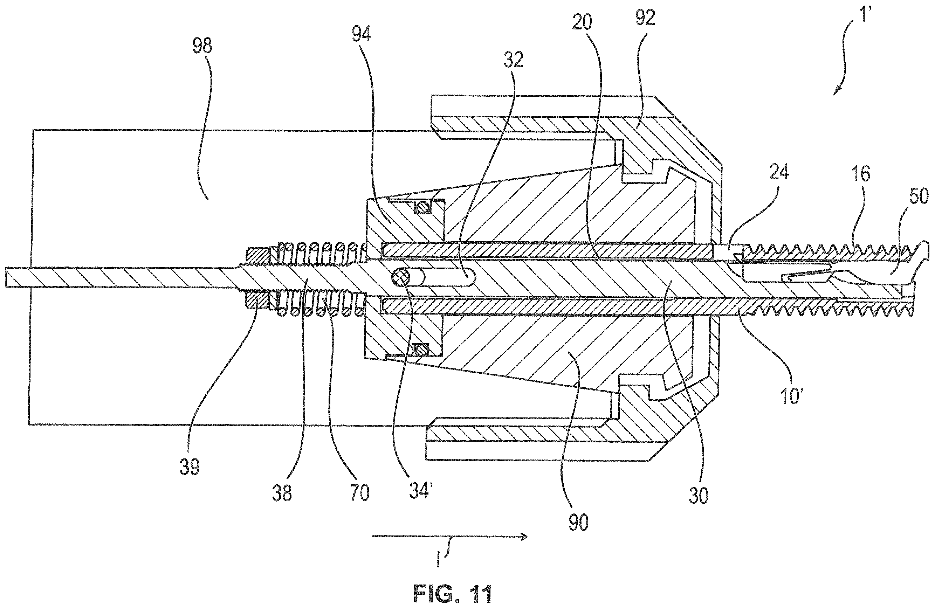

Wie bereits oben erwähnt worden ist, sind unterschiedliche Konstruktionen des Einbauwerkzeugs 1; 1' bevorzugt. In allen Ausführungsformen wird das oben beschriebene Stellglied 30 verwendet, welches über die Feder 70 entgegen der Installationsrichtung I federvorgespannt ist. Dazu stützt sich die Feder 70 an einem festen axialen Punkt am Einbauwerkzeug 1; 1' derart ab, dass das Stellglied 30 durch die Kraft der Feder 70 in den Spindelkörper 10; 10' hineingezogen wird. Die durch die Feder 70 bewirkte axiale Rückstellbewegung des Stellglieds 30 wird in ihrem Weg durch die Verbindung zwischen Langloch 32 und Stift 34 begrenzt (siehe Figuren 2 und 11).

Um die Feder 70 gegen den Anschlag vorzuspannen, weist das Stellglied 30 eine Gewindeende 38 mit Stellmutter 39 auf. Durch axiales Versetzen der Stellmutter 39 auf dem Gewindeende 38 wird die Feder 70 zwischen , Stellmutter 38 und Anschlag komprimiert und damit das Stellglied 30 gegen die Installationsrichtung I vorgespannt.

Im Einbauwerkzeug 1 der Figur 1 ist der Spindelkörper 10 vorzugsweise integral mit der Werkzeugaufnahme 80 verbunden. Der Spindelkörper 10 mit Werkzeugaufnahme 80 wird gemäß einer Ausführungsform mithilfe von Funkenerrosion hergestellt.

In einer weiteren bevorzugten Ausführungsform des Einbauwerkzeugs 1" gemäß Figur 12 ist die Werkzeugaufnahme 80' in Richtung des Spindelkörpers 10' hülsenartig aufgebaut. Während der Spindelkörper 10' den oben beschriebenen Antriebsabschnitt 12 (siehe Figur 10) aufweist, ist er innerhalb des hülsenartigen Endes 82 der Werkzeugaufnahme 80' mit einer hohlzylindrischen Klemmhülse 84 lösbar befestigt.

Die Klemmhülse 84 wird im hülsenartigen Ende 82 über ein radiales Außengewinde befestigt und befestigt dadurch klemmend reibschlüssig den Spindelkörper 10' an der radialen Innenseite 84. Damit ist der Spindelkörper 10' gezielt und mit wenig Aufwand austauschbar. Ein Austausch des Spindelkörpers 10' findet statt, wenn der Spindelkörper 10' verschlissen ist oder wenn die miteinander zu verbindenden Bauteile unterschiedlich lange Spindelkörper 10' erfordern. Zudem ist die Mitnahmeklinge 50 mit den oben beschriebenen Eigenschaften ebenfalls austauschbar, während der Rest des Werkzeugs 1" erhalten bleibt. Daher ist es nicht erforderlich, das Stellglied 30 mit Feder 70 auszutauschen.

Um den austauschbaren Spindelkörper 10' konzentrisch zum Stellglied 30 auszurichten und drehfest in seiner Position im Werkzeug 1' zu halten, ist am Antriebsabschnitt 12 des Spindelkörpers 10 die Axialnut 14 vorgesehen (siehe Figur 10). Da der Spindelkörper 10; 10' im Antriebsabschnitt 12 hohlzylindrisch ausgebildet ist, um die Anordnung des Stellglieds 30 zu gewährleisten, muss mindestens eine Axialnut 14 vorgesehen sein. Aus Stabilitätsgründen sind zwei einander gegenüberliegend angeordnete Axialnuten 14 oder mehr als zwei Axialnuten 14 vorteilhaft. In die mindestens eine Axialnut 14 greift mindestens ein radialer Vorsprung ein, der in einem Aufnahmeabschnitt 86 des hülsenartigen Endes 82 vorgesehen ist. Der Aufnahmeabschnitt 86 ist in seinem Durchmesser an den Durchmesser des Antriebsabschnitts 12 des Spindelkörpers 10'; 10" angepasst.

Gemäß einer weiteren bevorzugten Ausführungsform des Werkzeugs 1' ist der Spindelkörper 10' in einer Spannzange 90 mit Überwurfmutter 92 gehalten. Die Spannzange 90 weist ein lösbares Scheibenelement 94 auf, das als Anschlag für die Feder 70, als Aufnahmeabschnitt 96 für den Antriebsabschnitt 12 des Spindelkörpers 10' und als Positionierhilfe in der Spannzange 90 dient. Im Aufnahmeabschnitt 96 ist bevorzugt der Stift 34' vorgesehen, der das Stellglied 30 über das Langloch 32 führt. Der Stift 34' dient zudem bevorzugt der Ausrichtung des Spindelkörpers 10', wenn die Axialnut 14 auf den Stift 34 aufgesteckt wird. Um den Spindelkörper 10' im Scheibenelement 94 zu halten, wird das Scheibenelement 94 über die Spannzange 90 und die Überwurfmutter 92 in radialer Richtung zusammengedrückt. Vorzugsweise ist das Werkzeug 1' mit Spannzange 90 in einer Hohlwelle 98 angeordnet und befestigt. Entsprechend lässt sich auch hier der Spindelkörper 10' auf einfache Weise austauschen.

Dieses Austauschverfahren des Spindelkörpers lässt sich folgendermaßen zusammenfassen. Entfernen der Mitnahmeklinge aus der axialen Aussparung des Spindelkörpers, Lösen der Werkzeugaufnahme oder der Spannzange, die den Spindelkörper drehfest am Antriebsabschnitt hält, und Entfernen des Spindelkörpers vom Werkzeug, vorzugsweise ohne dass das Stellglied des Werkzeugs deinstalliert werden muss, und Einsetzen und Befestigen eines neuen Spindelkörpers in der Werkzeugaufnahme oder Spannzange. Das Herstellungsverfahren für die oben beschriebenen Ausführungsformen des Werkzeug 1; 1'; 1" lässt sich mit den folgenden Schritten zusammenfassen. Zunächst wird in einem ersten Schritt S1 der Spindelkörper 10; 10'; 10" mit dem Antriebsabschnitt 12 und dem Aufnahmeabschnitt 16 hergestellt. Dabei erzeugt man in einem zweiten Schritt S2 die axiale Aussparung 20 innerhalb des Spindelkörpers 10; 10'; 10". In einem dritten Schritt S3 wird das Stellglied 30 hergestellt und im Schritt S4 innerhalb der axialen Aussparung 20 angeordnet. Parallel oder nachfolgend zu den oben genannten Schritten wird im Schritt S5 die Mitnahmeklinge vorzugsweise mithilfe der Funkenerosion produziert. Abschließend wird die Mitnahmeklinge 50 manuell lösbar innerhalb der axialen Aussparung 20 angeordnet (Schritt S6).

Um die oben beschriebenen Ausführungsformen des Werkzeugs 1; 1'; 1" herstellen zu können, werden weiterhin bevorzugt der radiale Durchbruch 24 im Spindelkörper 10; 10' erzeugt. Über diesen Durchbruch 24, der auch als Radialfenster 24 bezeichnet wird, ist die Mitnahmeklinge 50 manuell lösbar. In einem weiteren bevorzugten Schritt ist es bevorzugt, das Stellglied 30 über den im Langloch 32 geführten Stift 34; 34' zu befestigen (Schritt S7). Gemäß bevorzugter Ausgestaltungen des vorliegenden Herstellungsverfahrens wird der Spindelkörper 10 als integrales Teil in Kombination mit der Werkzeugaufnahme hergestellt. Alternativ dazu ist es bevorzugt, die Werkzeugaufnahme 80' getrennt vom Spindelkörper 10; 10' vorzusehen und dann im Antriebsabschnitt 12 des Spindelkörpers 10; 10' mit dem Spindelkörper 10; 10' zu verbinden. Gemäß einer weiteren bevorzugten Alternative wird der Spindelkörper 10; 10' in einer Spannzange 90 mit Überwurfmutter 92 angeordnet und gehalten.

Das bereits oben beschriebene Verfahren zum Wechseln der Mitnahmeklinge 50 in den unterschiedlichen bevorzugten Ausführungsformen des Werkzeugs 1; 1'; 1" lässt sich mit den folgenden Schritten zusammenfassen. Im Schritt A1 erfolgt zunächst ein manuelles Lösen des Federbeins 60 der Mitnahmeklinge 50 aus dem radialen Durchbruch bzw. dem Radialfenster 24 des Spindelkörpers 10; 10'; 10".Denn der laterale Vorsprung 61 hält aufgrund der nach radial nach außen gerichteten Federspannung des Federbeins 60 die Mitnahmeklinge 50 innerhalb des Radialfensters 24 fest. Zum bevorzugten manuellen Lösen des Federbeins 60 wird der laterale Vorsprung 61 radial einwärts in den Spindelkörper 10; 10'; 10" hineinversetzt. Dieses Lösen erfolgt bevorzugt mithilfe eines Installationsstiftes oder bei entsprechender Ausgestaltung des Radialfensters 24 rein manuell ohne Werkzeug.

Nachfolgend wird bevorzugt im Schritt A2 die Mitnahmeklinge 50 manuell aus der axialen Aussparung 20 herausgezogen. Nachdem die Mitnahmeklinge 50 aus der axialen Aussparung 20 entfernt worden ist, erfolgt ein manuelles Einsetzen und Befestigen einer anderen Mitnahmeklinge 50 in der axialen Aussparung 20 (Schritt A3). Zu diesem Zweck werden die beiden einander gegenüberliegend angeordneten Federbeine 60, 62 aufeinander zu gedrückt, damit sie in die Öffnung 19 des Spindelkörpers 10; 10'; 10" einsetzbar sind. Sobald die Mitnahmeklinge 50 ausreichend tief in den Spindelkörper und im Speziellen in die axiale Aussparung 20 hineingeschoben worden ist, schnappt das Federbein 60 mit seinem lateralen Vorsprung 61 in das Radialfenster 24 selbstständig ein.

Um einen Drahtgewindeeinsatz D gemäß DE 10 2010 050 735 A1 in einer Gewindeöffnung eines Bauteils installieren zu können, wird dieser zunächst im Aufnahmeabschnitt 16 des Spindelkörpers 10; 10'; 10" angeordnet. Dies erfolgt mittels aufstecken oder aufschrauben auf den Aufnahmeabschnitt 16 (Schritt I1). Anschließend wird der Drahtgewindeeinsatzes D durch Drehen des Spindelkörpers 10; 10'; 10" in eine erste Drehrichtung in die Gewindeöffnung in der Installationsrichtung I eingedreht bzw. eingeschraubt. Sobald der Drahtgewindeeinsatz D eine gewünschte Eindrehtiefe in der Gewindeöffnung erreicht hat, wird zunächst die Drehbewegung des Spindelkörpers 10; 10'; 10" gestoppt. Danach wird das Stellglied 30 innerhalb des Spindelkörpers 10; 10'; 10" in Installationsrichtung I versetzt. Mit dieser Bewegung des Stellglieds 30 wird das Angriffsende 52 der Mitnahmeklinge 50 in die zweite Position außerhalb des Spindelkörpers 10; 10'; 10" gebracht. Auf diese Weise bildet das Angriffsende 52 für den eingedrehten Drahtgewindeeinsatz D die Stauchfläche 52b, die bei einem Rückdrehen des Spindelkörpers 10; 10'; 10" am freien Ende des Drahtgewindeeinsatzes D angreift. Entsprechend erfolgt nun ein Drehen des Spindelkörpers 10; 10'; 10" in eine zweite Drehrichtung, die der ersten Drehrichtung entgegengesetzt ist. Mit dieser Drehbewegung wird der Einbauzapfen des Drahtgewindeeinsatzes D gestaucht und in das Aufnahmegewinde der Gewindeöffnung des Bauteils bleibend radial zurückgebogen. Sobald der Einbauzapfen seinen zurückgebogenen Zustand erreicht hat, wird vorzugsweise die Drehbewegung in die zweite Drehrichtung gestoppt, um den Einbauzapfen und die Stauchfläche 52b mechanisch zu entlasten. Dann wird das Stellglied 30 in Richtung Antriebsabschnitt 12 bewegt, um das Angriffsende 52 der Mitnahmeklinge 50 aus der Wirkverbindung mit dem Einbauzapfen zu lösen. Es ist ebenfalls bevorzugt, das Angriffsende 52 der Mitnahmeklinge 50 während der Drehung des Spindelkörpers 10; 10'; 10" in die zweite Drehrichtung aus der Wirkverbindung mit dem Einbauzapfen zu lösen. Abschließend wird der Spindelkörper 10; 10'; 10" vollständig aus dem Drahtgewindeeinsatz G heraus gedreht oder heraus gezogen.

Um einen Drahtgewindeeinsatz D mit radial innen angeordneter Mitnahmekerbe in einer Gewindeöffnung eines Bauteils installieren zu können, wird dieser zunächst im Aufnahmeabschnitt 16 des Spindelkörpers 10; 10'; 10" angeordnet. Dies erfolgt mittels Aufstecken oder Aufschrauben auf den Aufnahmeabschnitt 16 (Schritt I1). Danach wird das Stellglied 30 innerhalb des Spindelkörpers 10; 10'; 10" in Installationsrichtung I versetzt. Mit dieser Bewegung des Stellglieds 30 wird das Angriffsende 52 der Mitnahmeklinge 50 in die zweite Position außerhalb des Spindelkörpers 10; 10'; 10" gebracht. Auf diese Weise stellt die Mitnahmeklinge 50 eine formschlüssige Wirkverbindung mit dem Drahtgewindeeinsatz D her. Dazu greift das Angriffsende 52 der Mitnahmeklinge 50 in die Mitnahmekerbe (nicht gezeigt) des Drahtgewindeeinsatzes D ein. Anschließend wird der Drahtgewindeeinsatzes D durch Drehen des Spindelkörpers 10; 10'; 10" in eine erste Drehrichtung in die Gewindeöffnung in der Installationsrichtung I eingedreht bzw. eingeschraubt. Sobald der Drahtgewindeeinsatz D eine gewünschte Eindrehtiefe in der Gewindeöffnung erreicht hat, wird zunächst die Drehbewegung des Spindelkörpers 10; 10'; 10" gestoppt. Dann wird das Stellglied 30 in Richtung Antriebsabschnitt 12 bewegt, um das Angriffsende 52 der Mitnahmeklinge 50 aus der Wirkverbindung mit dem Drahtgewindeeinsatz zu lösen. Nun erfolgt ein Drehen des Spindelkörpers 10; 10'; 10" in eine zweite Drehrichtung, die der ersten Drehrichtung entgegengesetzt ist. Mit dieser Drehbewegung wird der Spindelkörper 10; 10'; 10" vollständig aus dem Drahtgewindeeinsatz G heraus gedreht. Sollte der Drahtgewindeeinsatz D nur auf das Angriffsende 12 aufgesteckt sein, kann der Spindelkörper 10; 10'; 10" nach dem Lösen der Wirkverbindung zwischen Mitnahmeklinge 50 und Drahtgewindeeinsatz D aus dem Drahtgewindeeinsatz D heraus gezogen werden. Es ist ebenfalls bevorzugt, das Angriffsende 52 der Mitnahmeklinge 50 während der Drehung des Spindelkörpers 10; 10'; 10" in die zweite Drehrichtung aus der Wirkverbindung mit dem Drahtgewindeeinsatz zu lösen.

### Bezugszeichenliste

- 1; 1'; 1": Werkzeug
- 10; 10': Spindelkörper
- 12: Antriebsabschnitt
- 14: Axialnut
- 16: Aufnahmeabschnitt
- 17: Aufnahme
- 18: Gewinde
- 19: Öffnung
- 20: axiale Aussparung
- 22: Anschlagflächen
- 23: radiale Innenwand
- 30: Stellglied
- 32: Langloch
- 34: Stift
- 35: Öffnung
- 36: verjüngter Bereich
- 38: Gewindeabschnitt
- 39: Stellmutter
- 40: stellender Endbereich
- 41,43: Teilbereiche
- 32: Anlagefläche
- 44: Vorwärtsschieber
- 45: Rückwärtsanschlag
- 46: Ausstellschräge
- 50: Mitnahmeklinge
- 52: Angriffsende
- 52a: Eingriffsspitze
- 52b: Stauchfläche
- 54: Grundkörper
- 56, 58: Stützkante
- 60,62: Federbeine
- 61: lateraler Vorsprung
- H₆₁: Hinterschnitt
- 63: lateraler Vosprung
- 70: Feder
- 80, 80': Werkzeugaufnahme
- 82: hülsenartiges Ende
- 84: Klemmhülse
- 84a, 84i: radiale Innen- und Außenseite der Klemmhülse 84
- 86: Aufnahmeabschnitt
- 90: Spannfutter
- 92: Überwurfmutter
- 94: Scheibenelement
- 95: Anschlag
- 96: Aufnahmeabschnitt
- L: Längsachse
- I: Installationsrichtung
- B: Bereich
- D₄₀: Dicke
- H₄₀: Höhe
- M: Montagehebel-/Stift
- δ: Neigungswinkel des Angriffsendes 52
- α: Neigungswinkel

## Patentansprüche

1. Werkzeug (1; 1'; 1") zum Ein- oder Ausbauen eines Drahtgewindeeinsatzes (D), das die folgenden Merkmale aufweist:
a. einen Spindelkörper (10; 10') mit
a1. einem Antriebsabschnitt (12), über den der Spindelkörper (10; 10') um eine Längsachse drehbar ist,
a2. einem endseitig und abgewandt vom Antriebsabschnitt angeordneten Aufnahmeabschnitt (16), in dem ein Gewinde (18) zum Aufdrehen oder eine gewindelose Oberfläche zum Aufstecken des Drahtgewindeeinsatzes (D) auf den Aufnahmeabschnitt (16) vorgesehen ist, und
a3. einer axialen Aussparung (20), die sich im Inneren des Spindelkörpers über eine Länge erstreckt,
b. eine Mitnahmeklinge (50) mit einem Angriffsende, die in der axialen Aussparung (20) zumindest im Bereich des Aufnahmeabschnitts (16) zumindest axial versetzbar angeordnet ist, und
c. ein langgestrecktes Stellglied (30), das innerhalb der axialen Aussparung (20) in Längsrichtung bewegbar angeordnet ist, so dass das Angriffsende der Mitnahmeklinge (20) über das Stellglied (30) zwischen einer ersten Position innerhalb des Spindelkörpers (10; 10') und einer zweiten Position außerhalb des Spindelkörpers (10; 10') versetzbar ist.

2. Werkzeug gemäß Anspruch 1, welches eines oder eine Mehrzahl der folgenden Merkmale aufweist:
in dem sich die Aussparung über die gesamte Länge des Spindelkörpers und das Stellglied innerhalb der Aussparung vom Antriebsabschnitt bis in den Aufnahmeabschnitt erstreckt und eine axiale Bewegung des Stellglieds innerhalb der Aussparung formschlüssig begrenzt ist,
in dem das Stellglied an einem axialen Ende einen Vorwärtsschieber zur Betätigung der Mitnahmeklinge aufweist, der mit einer Längsachse des Spindelkörpers einen Winkel <90° einschließt,
dessen Spindelkörper einen radialen Durchbruch aufweist, in dem die Mitnahmeklinge lösbar in axialer Richtung des Spindelkörpers gehalten ist,
in dem die Aussparung zumindest im Aufnahmeabschnitt eine erste Radialnut aufweist, die in axialer Richtung verläuft und die die Mitnahmeklinge stützt,
in dem das Stellglied einen Rückwärtsschieber für die Mitnahmeklinge aufweist, mit dem die Mitnahmeklinge über das Stellglied in die Aussparung versetzbar ist, wobei der Rückwärtsschieber als eine Anlagefläche ausgebildet ist, die mit der Längsachse einen stumpfen Winkel einschließt.

3. Werkzeug gemäß einem der vorhergehenden Ansprüche, welches eines oder eine Mehrzahl der folgenden Merkmale aufweist:
dessen Mitnahmeklinge an einem dem Angriffsende abgewandten Ende ein erstes und ein zweites V-förmig angeordnetes Federbein aufweist, von denen das erste Federbein ein Ausstellen des Angriffsendes und das zweite Federbein ein Bewegen der Mitnahmeklinge in der Aussparung gewährleistet,
in dem der Antriebsabschnitt eine Werkzeugaufnahme oder eine Spannzange mit Überwurfmutter umfasst,
in dem die Mitnahmeklinge austauschbar sind,
in dem der Spindelkörper nicht integral mit der Werkzeugaufnahme oder der Spannzange verbunden und ohne gleichzeitiges Entfernen des Stellglieds austauschbar ist, und
in dem die Mitnahmeklinge selbsttätig gehalten ist.

4. Eine Mitnahmeklinge für ein Werkzeug zum Ein- oder Ausbauen von Drahtgewindeeinsätzen, die die folgenden Merkmale aufweist:
ein langgestreckter Grundkörper mit einem ersten und einem zweiten Ende, wobei
an dem ersten Ende ein Angriffsende und an dem zweiten Ende ein erstes und ein zweites V-förmig angeordnetes Federbein vorgesehen sind.

5. Mitnahmeklinge gemäß Anspruch 4, in der das erste und das zweite Federbein endseitig jeweils einen lateralen Vorsprung aufweisen, der eine Bewegung der Mitnahmeklinge im Werkzeug ermöglicht.

6. Mitnahmeklinge gemäß Anspruch 4 oder 5, deren Grundkörper benachbart zu den Federbeinen eine krummlinige Außenkontur aufweist, die als Kontaktfläche zum Bewegen der Mitnahmeklinge dient.

7. Herstellungsverfahren für ein Werkzeug zum Ein- oder Ausbauen eines Drahtgewindeeinsatzes, das die folgenden Schritte aufweist:
a. Herstellen (S1) eines Spindelkörpers mit einem Antriebsabschnitt und einem Aufnahmeabschnitt mit Gewinde oder einer gewindelosen Oberfläche,
b. Erzeugen (S2) einer axialen Aussparung innerhalb des gesamten Spindelkörpers, vorzugsweise mit einem einseitigen radialen Fenster,
c. Herstellen (S3) eines langgestreckten Stellglieds und Anordnen (S4) des Stellglieds in der axialen Aussparung,
d. Herstellen (S5) einer Mitnahmeklinge mit einem langgestreckten Grundkörper mit einem ersten und einem zweiten Ende, wobei an dem ersten Ende ein Angriffsende und an dem zweiten Ende ein erstes und ein zweites V-förmig angeordnetes Federbein vorgesehen sind, und
e. manuell lösbares Verbinden (S6) der Mitnahmeklinge über eine Befestigungsverbindung innerhalb der axialen Aussparung.

8. Herstellungsverfahren gemäß Anspruch 7 mit einem oder einer Mehrzahl der weiteren Schritte:
Erzeugen eines radialen Durchbruchs im Spindelkörper, über den die Mitnahmeklinge manuell lösbar ist und in dem die Mitnahmeklinge lösbar gehalten ist,
Befestigen des Stellglieds in der Aussparung über einen in einem Langloch geführtes Blockiermittel, sodass die axiale Bewegung des Stellglieds begrenzt ist (S7),
Anordnen einer Werkzeugaufnahme oder einer Spannzange mit Überwurfmutter im Antriebsabschnitt des Spindelkörpers.

9. Verfahren zum Wechseln einer Mitnahmeklinge in einem Werkzeug zum Ein- oder Ausbauen eines Drahtgewindeeinsatzes, das die folgenden Merkmale aufweist: einen Spindelkörper mit einem Antriebsabschnitt, über den der Spindelkörper um eine Längsachse drehbar ist, einen endseitig und abgewandt vom Antriebsabschnitt angeordneten Aufnahmeabschnitt, in dem ein Gewinde zum Aufdrehen oder eine gewindelose Oberfläche zum Aufstecken des Drahtgewindeeinsatzes auf den Aufnahmeabschnitt vorgesehen ist, und mit einer axialen Aussparung, die sich im Inneren des Spindelkörpers über eine Länge erstreckt, eine Mitnahmeklinge mit einem Angriffsende, die in der axialen Aussparung zumindest im Bereich des Aufnahmeabschnitts zumindest axial versetzbar angeordnet ist, und ein langgestrecktes Stellglied, das innerhalb der axialen Aussparung in Längsrichtung bewegbar angeordnet ist, sodass das Angriffsende der Mitnahmeklinge über das Stellglied zwischen einer ersten Position innerhalb des Spindelkörpers und einer zweiten Position außerhalb des Spindelkörpers versetzbar ist, wobei das Verfahren die folgenden Schritte aufweist:
a. Lösen (A1) eines Federbeins der Mitnahmeklinge aus einem radialen Durchbruch des Spindelkörpers,
b. Herausziehen (A2) der Mitnahmeklinge aus der axialen Aussparung und
c. manuelles Einsetzen und Befestigen einer anderen Mitnahmeklinge in der axialen Aussparung des Aufnahmeabschnitts (A3), bei dem das eine Federbein der Mitnahmeklinge im radialen Durchbruch einrastet.

10. Verfahren zum Wechseln eines Spindelkörpers (10; 10') in einem Werkzeug zum Ein- oder Ausbauen eines Drahtgewindeeinsatzes, das die folgenden Merkmale aufweist: den Spindelkörper (10; 10') mit einem Antriebsabschnitt, über den der Spindelkörper (10; 10') um eine Längsachse drehbar ist und der nicht integral mit einer Werkzeugaufnahme oder einer Spannzange verbunden ist, einem endseitig und abgewandt vom Antriebsabschnitt angeordneten Aufnahmeabschnitt, in dem ein Gewinde zum Aufdrehen oder eine gewindelose Oberfläche zum Aufstecken des Drahtgewindeeinsatzes auf den Aufnahmeabschnitt vorgesehen ist, und mit einer axialen Aussparung, die sich im Inneren des Spindelkörpers über eine Länge erstreckt, eine Mitnahmeklinge mit einem Angriffsende, die in der axialen Aussparung zumindest im Bereich des Aufnahmeabschnitts zumindest axial versetzbar angeordnet ist, und ein langgestrecktes Stellglied, das innerhalb der axialen Aussparung in Längsrichtung bewegbar angeordnet ist, sodass das Angriffsende der Mitnahmeklinge über das Stellglied zwischen einer ersten Position innerhalb des Spindelkörpers und einer zweiten Position außerhalb des Spindelkörpers versetzbar ist, wobei das Verfahren die folgenden Schritte aufweist:
a. Entfernen der Mitnahmeklinge aus der axialen Aussparung des Spindelkörpers,
b. Lösen der Werkzeugaufnahme oder der Spannzange, die den Spindelkörper drehfest am Antriebsabschnitt hält, und Entfernen des Spindelkörpers vom Werkzeug, vorzugsweise ohne dass das Stellglied des Werkzeugs deinstalliert werden muss, und
c. Einsetzen und Befestigen eines neuen Spindelkörpers in der Werkzeugaufnahme oder Spannzange.

11. Installationsverfahren für einen Drahtgewindeeinsatz in einer Gewindeöffnung mit einem Werkzeug gemäß einem der Ansprüche 1 bis 3, das die folgenden Merkmale aufweist:
a. Anordnen des Drahtgewindeeinsatzes im Aufnahmeabschnitt des Spindelkörpers,
b. Eindrehen des Drahtgewindeeinsatzes durch Drehen des Spindelkörpers in die Gewindeöffnung in eine Installationsrichtung,
c. Versetzen des Stellglieds innerhalb des Spindelkörpers in Installationsrichtung und Bewegen eines Angriffsendes der Mitnahmeklinge in die zweite Position außerhalb des Spindelkörpers,
d. Versetzen des Einbauzapfens aus einer Anfangsposition radial auswärts und
e. Ausdrehen oder heraus Ziehen des Spindelkörpers aus dem Drahtgewindeeinsatz.

12. Installationsverfahren nach Anspruch 11 mit dem weiteren Schritt:
Versetzen des Angriffsendes in die erste Position durch axiales Bewegen des Stellglieds.

13. Installationsverfahren für einen Drahtgewindeeinsatz in einer Gewindeöffnung mit einem Werkzeug gemäß einem der Ansprüche 1 bis 3, das die folgenden Merkmale aufweist:
a. Anordnen des Drahtgewindeeinsatzes im Aufnahmeabschnitt des Spindelkörpers,
b. Versetzen des Stellglieds innerhalb des Spindelkörpers in Installationsrichtung und Bewegen eines Angriffsendes der Mitnahmeklinge in Eingriff mit dem Drahtgewindeeinsatz,
c. Eindrehen des Drahtgewindeeinsatzes durch Drehen des Spindelkörpers in die Gewindeöffnung in eine Installationsrichtung,
d. Ausdrehen oder heraus Ziehen des Spindelkörpers aus dem Drahtgewindeeinsatz.

14. Installationsverfahren nach Anspruch 13 mit dem weiteren Schritt:
axiales Versetzen des Stellglieds entgegen der Installationsrichtung und Lösen des Angriffsendes der Mitnahmeklinge aus dem Eingriff mit dem Drahtgewindeeinsatz.

## Claims

1. Tool (1; 1'; 1") for installing or removing a wire thread insert (D) which comprises the following features:
a. a spindle body (10; 10') having
a1. a driving section (12), by means of which the spindle body (10; 10') can be rotated about a longitudinal axis,
a2. a receiving section (16) arranged at the end and facing away from the driving section, in which a thread (18) for screwing on or a threadless surface for plugging on the wire thread insert (D) onto the receiving section (16) is provided, and
a3. an axial recess (20), which extends within the spindle body over a length,
b. an entraining blade (50) with an engaging end, which is arranged at least axially displaceable in the axial recess (20) at least in the portion of the receiving section (16), and
c. an elongated actuator (30) which is arranged movably in the longitudinal direction within the axial recess (20) so that the engaging end of the entraining blade (20) can be displaced by means of the actuator (30) between a first position within the spindle body (10; 10') and a second position outside the spindle body (10; 10').

2. Tool according to claim 1, comprising one or a plurality of the following features:
in which the recess extends over the entire length of the spindle body and the actuator extends within the recess from the driving section up to the receiving section and an axial movement of the actuator within the recess is limited in a positive-locking or form-fit manner,
in which the actuator comprises at an axial end a forward slider for actuating the entraining blade which encloses an angle <90° with a longitudinal axis of the spindle body,
the spindle body of which comprises a radial opening in which the entraining blade is releasably held in the axial direction of the spindle body,
in which the recess comprises, at least in the receiving section, a first radial groove which extends in the axial direction and which supports the entraining blade,
in which the actuator comprises a backward slider for the entraining blade with which the entraining blade can be displaced into the recess by means of the actuator, wherein the backward slider is formed as an abutment face which encloses an obtuse angle with the longitudinal axis.

3. Tool according to one of the preceding claims, comprising one or a plurality of the following features:
the entraining blade of which comprises, at an end facing away from the engaging end, a first and a second spring strut arranged in a V-shape, the first spring strut of which ensures a displacing of the engaging end and the second spring strut ensures a movement of the entraining blade in the recess,
in which the driving section comprises a tool holder or a collet with a sleeve nut,
in which the entraining blade is replaceable,
in which the spindle body is not integrally connected to the tool holder or the collet and can be replaced without removing the actuator at the same time, and
in which the entraining blade is held in a self-acting manner.

4. An entraining blade for a tool for installing or removing wire thread inserts which comprises the following features:
an elongated base body having a first and a second end, wherein
at the first end an engaging end and at the second end a first and a second spring strut arranged in a V-shape are provided.

5. Entraining blade according to claim 4, in which the first and second spring struts each have a lateral projection at the end which allows a movement of the entraining blade in the tool.

6. Entraining blade according to claim 4 or 5, the base body of which, adjacent to the spring struts, has a curvilinear outer contour which serves as a contact face for moving the entraining blade.

7. Manufacturing method for a tool for installing or removing a wire thread insert, comprising the following steps:
a. manufacturing (S1) a spindle body having a driving section and a receiving section with a thread or a threadless surface,
b. creating (S2) an axial recess within the entire spindle body, preferably with a one-sided radial window,
c. manufacturing (S3) an elongated actuator and arranging (S4) the actuator in the axial recess,
d. manufacturing (S5) an entraining blade comprising an elongated base body having a first and a second end, wherein at the first end an engaging end and at the second end a first and a second spring strut arranged in a V-shape are provided, and
e. manually releasably connecting (S6) the entraining blade by means of a fastening connection within the axial recess.

8. Manufacturing method according to claim 7 with one or a plurality of the further steps:
creating a radial opening in the spindle body, by means of which the entraining blade can be released manually and in which the entraining blade is held releasably,
fastening the actuator in the recess by means of a blocking means guided in a slot, so that the axial movement of the actuator is limited (S7),
arranging a tool holder or a collet with a sleeve nut in the driving section of the spindle body.

9. Method for replacing an entraining blade in a tool for installing or removing a wire thread insert, comprising the following features: a spindle body having a driving section, by means of which the spindle body can be rotated about a longitudinal axis, a receiving section arranged at the end and facing away from the driving section, in which receiving section a thread for screwing on or a threadless surface for plugging on the wire thread insert onto the receiving section is provided, and having an axial recess, which extends in the interior of the spindle body over a length, an entraining blade with an engaging end, which is arranged at least axially displaceable in the axial recess at least in the portion of the receiving section, and an elongated actuator which is arranged movably in the longitudinal direction within the axial recess so that the engaging end of the entraining blade can be displaced by means of the actuator between a first position within the spindle body and a second position outside the spindle body, wherein the method comprises the following steps:
a. releasing (A1) a spring strut of the entraining blade from a radial opening of the spindle body,
b. pulling out (A2) the entraining blade from the axial recess and
c. manually inserting and fastening a different entraining blade in the axial recess of the receiving section (A3), in which the one spring strut of the entraining blade latches into the radial opening.

10. Method for replacing a spindle body (10; 10') in a tool for installing or removing a wire thread insert, which comprises the following features: the spindle body (10; 10') having a driving section by means of which the spindle body (10; 10') can be rotated about a longitudinal axis and which is not integrally connected to a tool holder or a collet, a receiving section arranged at the end and facing away from the driving section, in which receiving section a thread is provided for screwing on or a threadless surface for plugging on the wire thread insert onto the receiving section is provided, and having an axial recess which extends in the interior of the spindle body over a length, an entraining blade with an engaging end, which is arranged at least axially displaceable in the axial recess at least in the portion of the receiving section, and an elongated actuator which is arranged movably in the longitudinal direction within the axial recess so that the engaging end of the entraining blade can be displaced by means of the actuator between a first position within the spindle body and a second position outside the spindle body, wherein the method comprises the following steps:
a. removing the entraining blade from the axial recess of the spindle body,
b. releasing the tool holder or the collet, which holds the spindle body rotation-proof on the driving section, and removing the spindle body from the tool, preferably without having to deinstall the actuator of the tool, and
c. inserting and fastening a new spindle body in the tool holder or collet.

11. Installation method for a wire thread insert in a thread opening with a tool according to one of the claims 1 to 3 which comprises the following features:
a. arranging the wire thread insert in the receiving section of the spindle body,
b. screwing in the wire thread insert by rotating the spindle body into the thread opening in an installation direction,
c. displacing the actuator within the spindle body in the installation direction and moving an engaging end of the entraining blade in the second position outside the spindle body,
d. displacing the installation tang from a starting position radially outwards and
e. unscrewing or pulling the spindle body out of the wire thread insert.

12. Installation method according to claim 11 with the further step:
displacing the engaging end in the first position by axially moving the actuator.

13. Installation method for a wire thread insert in a thread opening with a tool according to one of the claims 1 to 3, which comprises the following features:
a. arranging the wire thread insert in the receiving section of the spindle body,
b. displacing the actuator within the spindle body in installation direction and moving an engaging end of the entraining blade into engagement with the wire thread insert,
c. screwing in the wire thread insert by rotating the spindle body into the thread opening in an installation direction,
d. unscrewing or pulling the spindle body out of the wire thread insert.

14. Installation method according to claim 13 with the further step:
axially displacing the actuator against the installation direction and releasing the engaging end of the entraining blade from the engagement with the wire thread insert.

## Revendications

1. Outil (1 ; 1' ; 1") pour le montage ou le démontage d'un insert fileté en fil métallique (D), présentant les caractéristiques suivantes :
a. un corps de broche (10 ; 10') comprenant
a1. une section d'entraînement (12) par le biais de laquelle le corps de broche (10 ; 10') peut être mis en rotation autour d'un axe longitudinal,
a2. une section de réception (16) disposée à l'extrémité et opposée à la section d'entraînement, dans laquelle il est prévu un filetage (18) pour le vissage ou une surface exempte de filetage pour l'enfichage de l'insert fileté en fil métallique (D) sur la section de réception (16), et
a3. un évidement axial (20) s'étendant sur une longueur à l'intérieur du corps de broche,
b. une lame entraîneuse (50) comprenant une extrémité d'engagement, laquelle est disposée dans l'évidement axial (20) de manière à pouvoir être déplacée au moins axialement au moins dans la région de la section de réception (16), et
c. un organe de réglage (30) allongé, lequel est disposé de façon mobile dans le sens longitudinal dans l'évidement axial (20), de telle façon que l'extrémité d'engagement de la lame entraîneuse (20) peut être déplacée par le biais de l'organe de réglage (30), entre une première position à l'intérieur du corps de broche (10 ; 10') et une deuxième position à l'extérieur du corps de broche (10 ; 10').

2. Outil selon la revendication 1, présentant l'une ou plusieurs des caractéristiques suivantes :
- l'évidement s'étend sur toute la longueur du corps de broche et l'organe de réglage s'étend de la section d'entraînement jusqu'à la section de réception à l'intérieur de l'évidement, et un mouvement axial de l'organe de réglage à l'intérieur de l'évidement est limité par complémentarité de forme,
- à une extrémité axiale, l'organe de réglage présente un dispositif de poussée vers l'avant pour l'actionnement de la lame entraîneuse, lequel forme un angle <90° avec un axe longitudinal du corps de broche,
- le corps de broche présente une percée radiale, dans laquelle la lame entraîneuse est maintenue de façon amovible dans la direction axiale du corps de broche,
- l'évidement présente une première rainure radiale au moins dans la section de réception, laquelle s'étend dans la direction axiale et supporte la lame entraîneuse,
- l'organe de réglage présente un dispositif de poussée vers l'arrière pour la lame entraîneuse, avec lequel la lame entraîneuse peut être déplacée vers l'évidement par le biais de l'organe de réglage, le dispositif de poussée vers l'arrière étant conçu comme une surface d'appui formant un angle obtus avec l'axe longitudinal.

3. Outil selon l'une des revendications précédentes, présentant l'une ou plusieurs des caractéristiques suivantes :
- à une extrémité opposée à l'extrémité d'engagement, la lame entraîneuse présente une première et une deuxième jambe de ressort disposées en forme de V, parmi lesquelles la première jambe de ressort permet d'exposer l'extrémité d'engagement et la deuxième jambe de ressort permet à la lame entraîneuse de se déplacer dans l'évidement,
- la section d'entraînement comporte un logement d'outil ou une pince de serrage avec un écrou-raccord,
- la lame entraîneuse est remplaçable,
- le corps de broche n'est pas relié intégralement au logement d'outil ou à la pince de serrage et peut être remplacé sans retrait simultanément de l'organe de réglage, et
- la lame entraîneuse est maintenue automatiquement.

4. Lame entraîneuse pour un outil destiné à monter ou démonter des inserts filetés en fil métallique, présentant les caractéristiques suivantes :
- un corps de broche allongé comprenant une première et une deuxième extrémité, dans lequel
- une extrémité d'engagement est prévue à la première extrémité et une première et une deuxième jambe de ressort disposées en forme de V sont prévues à la deuxième extrémité.

5. Lame entraîneuse selon la revendication 4, dans laquelle la première et la deuxième jambe de ressort présentent respectivement une saillie latérale à l'extrémité, permettant à la lame entraîneuse de se déplacer dans l'outil.

6. Lame entraîneuse selon la revendication 4 ou 5, dont le corps de base présente, à proximité des jambes de ressort, un contour extérieur curviligne servant de surface de contact pour le mouvement de la lame entraîneuse.

7. Procédé de fabrication pour un outil pour le montage ou le démontage d'un insert fileté en fil métallique, présentant les étapes suivantes :
a. fabrication (S1) d'un corps de broche avec une section d'entraînement et une section de réception comprenant un filetage ou une surface exempte de filetage,
b. formation (S2) d'un évidement axial dans l'ensemble du corps de broche, de préférence avec une fenêtre radiale unilatérale,
c. fabrication (S3) d'un organe de réglage allongé et disposition (S4) de l'organe de réglage dans l'évidement axial,
d. fabrication (S5) d'une lame entraîneuse avec un corps de base allongé présentant une première et une deuxième extrémité, une extrémité d'engagement étant prévue à la première extrémité et une première et une deuxième jambes de ressort disposées en forme de V étant prévues à la deuxième extrémité, et
e. liaison amovible manuellement (S6) de la lame entraîneuse par une liaison de fixation à l'intérieur de l'évidement axial.

8. Procédé de fabrication selon la revendication 7, comprenant une ou plusieurs des étapes suivantes :
- fabrication d'une percée radiale dans le corps de broche, par le biais de laquelle la lame entraîneuse est amovible manuellement et dans laquelle la lame entraîneuse est maintenue de façon amovible,
- fixation de l'organe de réglage dans l'évidement par le biais d'un moyen de blocage guidé dans un trou oblong, de manière à limiter (S7) le mouvement axial de l'organe de réglage,
- disposition d'un logement d'outil ou d'une pince de serrage avec un écrou-raccord dans la section d'entraînement du corps de broche.

9. Procédé pour le remplacement d'une lame entraîneuse dans un outil pour le montage ou le démontage d'un insert fileté en fil métallique, présentant les caractéristiques suivantes : un corps de broche comprenant une section d'entraînement par le biais de laquelle le corps de broche peut être mis en rotation autour d'un axe longitudinal, une section de réception disposée à l'extrémité et opposée à la section d'entraînement, dans laquelle il est prévu un filetage pour le vissage ou une surface exempte de filetage pour l'enfichage de l'insert fileté en fil métallique sur la section de réception, et un évidement axial s'étendant sur une longueur à l'intérieur du corps de broche, une lame entraîneuse avec une extrémité d'engagement, laquelle est disposée de façon au moins axialement déplaçable dans l'évidement axial au moins dans la région de la section de réception, et un organe de réglage allongé disposé de façon mobile dans le sens longitudinal à l'intérieur de l'évidement axial, de telle façon que l'extrémité d'engagement de la lame entraîneuse peut être déplacée par le biais de l'organe de réglage entre une première position à l'intérieur du corps de broche et une deuxième position à l'extérieur du corps de broche, le procédé présentant les étapes suivantes :
a. détachement (A1) d'une jambe de ressort de la lame entraîneuse par rapport à une percée radiale du corps de broche,
b. retrait (A2) de la lame entraîneuse hors de l'évidement axial, et
c. introduction manuelle et fixation d'une autre lame entraîneuse dans l'évidement axial de la section de réception (A3), où l'une des jambes de ressort de la lame entraîneuse s'encliquète dans la percée radiale.

10. Procédé pour le remplacement d'un corps de broche (10 ; 10') dans un outil pour le montage ou le démontage d'un insert fileté en fil métallique, présentant les caractéristiques suivantes : le corps de broche (10 ; 10') comprenant une section d'entraînement par le biais de laquelle le corps de broche (10 ; 10') peut être mis en rotation autour d'un axe longitudinal et laquelle n'est pas reliée intégralement à un logement d'outil ou à une pince de serrage, une section de réception disposée à l'extrémité et opposée à la section d'entraînement, dans laquelle il est prévu un filetage pour le vissage ou une surface exempte de filetage pour l'enfichage de l'insert fileté en fil métallique sur la section de réception, et un évidement axial s'étendant sur une longueur à l'intérieur du corps de broche, une lame entraîneuse avec une extrémité d'engagement, laquelle est disposée de façon au moins axialement déplaçable dans l'évidement axial au moins dans la région de la section de réception, et un organe de réglage allongé disposé de façon mobile dans le sens longitudinal à l'intérieur de l'évidement axial, de telle façon que l'extrémité d'engagement de la lame entraîneuse peut être déplacée par le biais de l'organe de réglage entre une première position à l'intérieur du corps de broche et une deuxième position à l'extérieur du corps de broche, le procédé présentant les étapes suivantes :
a. retrait de la lame entraîneuse hors de l'évidement axial du corps de broche,
b. détachement du logement d'outil ou de la pince de serrage maintenant le corps de broche de manière fixe en rotation sur la section d'entraînement, et retrait du corps de broche hors de l'outil, de préférence sans avoir à désinstaller l'organe de réglage de l'outil, et
c. introduction et fixation d'une nouvelle lame entraîneuse dans le logement d'outil ou la pince de serrage.

11. Procédé d'installation d'un insert fileté en fil métallique dans une ouverture filetée à l'aide d'un outil selon l'une des revendications 1 à 3, présentant les caractéristiques suivantes :
a. disposition de l'insert fileté en fil métallique dans la section de réception du corps de broche,
b. vissage de l'insert fileté en fil métallique par rotation du corps de broche dans l'ouverture filetée dans une direction d'installation,
c. déplacement de l'organe de réglage à l'intérieur du corps de broche dans la direction d'installation et transfert d'une extrémité d'engagement de la lame entraîneuse vers la deuxième position à l'extérieur du corps de broche,
d. déplacement d'un tenon de montage radialement vers l'extérieur à partir d'une position de départ, et
e. dévissage ou retrait du corps de broche hors de l'insert fileté en fil métallique.

12. Procédé d'installation selon la revendication 11 comportant l'autre étape suivante :
décalage de l'extrémité d'engagement dans la première position moyennant le déplacement axial de l'organe de réglage.

13. Procédé d'installation pour un insert fileté en fil métallique dans une ouverture filetée à l'aide d'un outil selon l'une des revendications 1 à 3, présentant les caractéristiques suivantes :
a. disposition de l'insert fileté en fil métallique dans la section de réception du corps de broche,
b. déplacement de l'organe de réglage à l'intérieur du corps de broche dans la direction d'installation et mise en engagement d'une extrémité d'engagement de la lame entraîneuse avec l'insert fileté en fil métallique,
c. vissage de l'insert fileté en fil métallique par rotation du corps de broche dans l'ouverture filetée dans une direction d'installation,
d. dévissage ou retrait du corps de broche hors de l'insert fileté en fil métallique.

14. Procédé d'installation selon la revendication 13, comprenant l'étape suivantes :
- déplacement axial de l'organe de réglage contre la direction d'installation et désengagement de l'extrémité d'engagement de la lame entraîneuse d'avec l'insert fileté en fil métallique.
